# EUROPÄISCHE PATENTSCHRIFT

(11) **EP 3 516 947 B1**
(45) Veröffentlichungstag und Bekanntmachung des Hinweises auf die Patenterteilung: **04.11.2020**
(21) Anmeldenummer: 19150357.2
(22) Anmeldetag: 04.01.2019
(51) Int. Cl.: A01G 3/033, B26B 15/00

(54) **SCHNEIDVORRICHTUNG**
CUTTING DEVICE
DISPOSITIF DE COUPE

(30) Priorität: 25.01.2018 DE 102018201164
(43) Veröffentlichungstag der Anmeldung: 31.07.2019
(73) Patentinhaber: Robert Bosch GmbH, 70442 Stuttgart (DE)
(72) Erfinder: Nemeth, Gabor, 3521 Miskolc (HU); Nagy, Janos, 3443 Meznagymihaly (HU); Sepsi, Krisztian, 3531 Miskolc (HU); Farago, Peter, 3532 Miskolc (HU); Mäser, Rene, 3300 Amstetten (AT)

(56) Entgegenhaltungen:
- EP-A1- 3 081 075
- DE-A1-102016 211 976
- JP-A- 2013 146 544

## Beschreibung

### Stand der Technik

Es sind bereits Schneidvorrichtungen nach dem Oberbegriff des Anspruchs 1 bekannt, beispielsweise die DE10 2016 211976 A1.

### Offenbarung der Erfindung

Die Erfindung geht aus von einer Schneidvorrichtung, insbesondere einer Gartenschneidvorrichtung, mit zumindest zwei relativ zueinander bewegbaren Schneidelementen, mit zwei relativ zueinander bewegbaren Griffelementen, mit zumindest einer Antriebseinheit, die in zumindest einem Betriebszustand dazu vorgesehen ist, eine Bewegung des zweiten Schneidelements relativ zu dem ersten Schneidelement zumindest zu unterstützen und mit zumindest einem Antriebskraftübertragungselement, das zumindest in dem einen Betriebszustand mit der Antriebseinheit in Wirkverbindung steht.

Es wird vorgeschlagen, dass das Antriebskraftübertragungselement ein Seil ist, das eine Schlinge bzw. Öse und einen Knoten aufweist, wobei der Knoten (1500) an, insbesondere zumindest teilweise in einer Aufnahme (33) einer Seilwinde (32) und die Schlinge (1502) an einem Hebel (80) angeordnet ist. Vorzugsweise ist die Schneidvorrichtung als eine Schere, besonders bevorzugt als eine Gartenschere, ausgebildet, kann aber auch als Hochentaster oder prinzipiell als Handwerkzeugmaschine ausgeführt sein. Bevorzugt sind die zwei relativ zueinander bewegbaren Schneidelemente schwenkbar zueinander gelagert. Unter einer "Gartenschneidvorrichtung" soll in diesem Zusammenhang insbesondere eine Schneidvorrichtung verstanden werden, die zu einem Einsatz an Pflanzen vorgesehen ist. Vorzugsweise soll darunter insbesondere eine Schneidvorrichtung verstanden werden, die zu einem Schneiden von Gewächsen, Hecken, Sträuchern, Ästen und/oder anderen Gegenständen vorgesehen ist. Unter einem "Schneidelement" soll in diesem Zusammenhang insbesondere ein Element der Schneidvorrichtung verstanden werden, das zu einer direkten Kontaktierung eines zu schneidenden Objekts vorgesehen ist. Vorzugsweise soll darunter ein Element verstanden werden, das zu einer direkten Teilung eines zu schneidenden Objekts vorgesehen ist. Grundsätzlich ist dabei denkbar, dass zumindest eines der Schneidelemente passiv ausgebildet ist, wie beispielsweise als ein Amboss und/oder als eine passive Schneidkante. Bevorzugt weist jedoch zumindest ein Schneidelement eine aktive Schneidkante, insbesondere eine Klinge auf, die zu einem aktiven Schneiden vorgesehen ist. Ferner soll in diesem Zusammenhang unter einem "Griffelement" insbesondere ein Element verstanden werden, dass zumindest einen Teil eines Handgriffs bildet. Vorzugsweise soll darunter ein Element verstanden werden, welches in einem Betrieb zumindest teilweise von einem Bediener umgriffen wird. Bevorzugt werden in einem Betrieb beide Griffelemente von einem Bediener, insbesondere mit derselben Hand, umgriffen. Darunter, dass "eine Bewegung des zweiten Schneidelements relativ zu dem ersten Schneidelement unterstützt" wird, soll in diesem Zusammenhang insbesondere verstanden werden, dass durch die Antriebseinheit eine Kraft erzeugt wird, welche zumindest teilweise in eine der Bedienerkraft gleichgerichteten Richtung wirkt. Vorzugsweise soll darunter verstanden werden, dass in zumindest einem Betriebszustand eine manuelle Kraft, welche insbesondere eine Schließbewegung der Schneidelemente relativ zueinander bewirkt, durch eine zusätzlich durch die Antriebseinheit erzeugte Kraft unterstützt wird. Vorteilhaft ist das Antriebskraftübertragungselement innerhalb der Öffnungsfeder angeordnet, um vor Umwelteinflüssen geschützt zu werden. Somit ist auch keine separate Anordnung des Antriebskraftübertragungselements zwischen den Griffelementen erforderlich.

Dadurch, dass das Antriebskraftübertragungselement eine Schlinge bzw. ein Auge und einen Knoten aufweist, insbesondere einen Stopper Knoten, kann das Antriebskraftübertragungselement sehr leicht und/oder sicher an der Schneidvorrichtung montiert werden. Zudem ist eine derartige Konstruktion platzsparend. Die Schlinge und der Knoten sind vorteilhaft durch das Antriebskraftübertragungselement selbst gebildet, also einstückig mit ihm ausgebildet. Somit sind keine weiteren Klemmmittel oder zusätzliche Stopper Bauteile erforderlich. Durch die platzsparende und einfach Konstruktion besteht mehr Freiraum insbesondere in den Griffen der Schneidvorrichtung, bzw. es wird Platz für die Anordnung weiterer Elemente an den Griffelementen der Schneidvorrichtung beispielsweise für Schalter zur Einstellung einer Kraftunterstützung der Schneidvorrichtung, Überbrückungselemente zur Kabelführung zwischen den Griffelementen oder dergleichen geschaffen. Die Griffelemente können dadurch beispielsweise kompakter ausgeführt werden. Die Gefahr eines Verhedderns bzw. einer Fehlfunktion des Antriebskraftübertragungselements kann verringert werden. Die Montage wird vereinfacht, die Bauteilanzahl reduziert.

Das Antriebskraftübertragungselement ist ein Seil. Vorteilhaft kann durch die hohe Flexibilität eines Seils, seine Kompaktheit, die guten Wickeleigenschaften, die guten Zug- und Standfestigkeitseigenschaften und/oder dergleichen das Antriebskraftübertragungselement kompakt und damit auch die Schneidvorrichtung kompakter ausgebildet werden. Das Antriebskraftübertragungselement könnte aber auch ein Draht- oder Drahtgeflecht oder dergleichen sein.

Des Weiteren wird vorgeschlagen, dass das Antriebskraftübertragungselement bzw. das Seil aus Polyethylen gebildet sind, insbesondere aus Polyethylen mit ultrahoher molarer Masse (UHMW-PE). Das Seil ist insbesondere ein Dyneema® Seil. Ein derartiges Antriebskraftübertragungselement bzw. Seil ist besonders abriebfest. Das Antriebskraftübertragungselement bzw. Seil kann zudem reibungsarm beschichtet sein. Dadurch wird der Verschleiß verringert. Es lässt sich leichter aufrollen bzw. -wickeln oder -kurbeln. Es lässt sich dadurch auch übereinanderlegen. Es gleitet dadurch an- oder ineinander leichter. Es wird resistenter insbesondere gegen Witterung und/oder langlebiger. Es kann leichter direkt in der Öffnungsfeder angeordnet werden. Gleitet reibungsärmer über Führungshülsen oder dergleichen. Auch ein Kontakt mit der Wandung der Öffnungsfeder schadet dem Antriebskraftübertragungselement weniger. Es weist gute Wickeleigenschaften, eine hohe Festigkeit und eine gute Alterungs- bzw. Nutzungsbeständigkeit auf. Das Seil kann aber auch aus Polyacryl, Kevlar, Draht oder einem anderen Material gebildet sein.

Ferner wird vorgeschlagen, dass der Knoten ein Diamantknoten ist. Dieser bildet eine hinreichende Verdickung des Seils, so dass es nicht durch die Aufnahme an der Seilwinde hindurchrutschen kann. Ferner ist dieser Knoten stabil, lässt sich leicht knoten und/oder ist sehr beständig gegen ungewolltes Öffnen.

Zudem sind der Knoten am ersten Griffelement, insbesondere an einer Aufnahme einer Seilwinde bzw. einem Durchgangsloch durch eine Welle und die Schlinge am oder im zweiten Griffelement, insbesondere an einem Hebel angeordnet. Bei der Montage lässt sich die Schlinge leicht durch die Aufnahme ggf. die Hülsen, die Öffnungsfeder oder weitere Bauteile führen und dann einfach über das Ende des Hebels bzw. Hebelarms stülpen, wodurch der Hebel mit der Seilwinde verbunden ist. Somit ist eine Fixierung des Antriebskraftübertragungselements an der Schneidvorrichtung sehr leicht möglich. Auch eine Demontage, ein Austausch (z.B. bei gerissenem oder gebrochenem Antriebskraftübertragungselement) lässt sich dadurch einfach realisieren. Ferner werden zusätzliche Elemente und/oder die Paarung unterschiedlicher Materialien zur Bildung des Antriebskraftübertragungselements und/oder dessen Fixierung an der Schneidvorrichtung, wie beispielsweise Klemmen oder Hülsen, vermieden.

Es wird vorgeschlagen, dass zur Bildung der Schlinge ein Teil des Seils, insbesondere nahezu die Hälfte, in den anderen Teil des Seils zurückgeführt ist. Das Antriebkraftübertragungselement wird quasi hälftig gefaltet und die erste Hälfte in die zweite Hälfte geführt, so dass beide Enden des initialen Seils zusammenkommen. Die zweite Hälfte dient quasi als Mantel. In der Mitte bzw. der Umkehr des Seils wird die Schlinge gebildet. Die zwei initialen Enden werden mit einem Diamantknoten verknotet. Ein Reststück der Enden kann vorteilhaft noch etwas überstehen um ein späteres Setzten des Knotens oder eine leichte Verschiebung der Knotenbestandteile zueinander zu ermöglichen. Die Enden werden vorteilhaft verschweißt, beispielsweise mit einer Heißklinge.

Beispielhaft ist das Antriebskraftübertragungselement wie folgt dimensioniert: Die Länge beträgt rund 10-15 cm, der Durchmesser rund 2 mm, der Diamantknoten ein 2 bis 5-faches des Durchmessers, insbesondere 3 bis 4-faches des Durchmessers also beispielsweise 6 mm und das Auge bzw. die Schlinge einen Öffnungsdurchmesser von 10-15 mm, insbesondre rund 11-12 mm. Der Hebel über den die Schlinge gestülpt wird weist einen Durchmesser von rund 7-9 mm auf. Außerdem wird vorgeschlagen, dass zumindest an einem der Griffelemente, insbesondere an beiden Griffelementen, ein Führungselement, insbesondere eine Führungshülse, angeordnet ist, um das Antriebskraftübertragungselement reibarm und/oder verschleißarm zu führen. Das Führungselement ist insbesondere aus einem reibarmen Material und/oder weist eine reibarm beschaffene Oberfläche auf. Es kann beispielsweise Polyoxymethylen oder UHMWP aufweisen oder daraus bestehen. Das Führungselement weist vorteilhaft Führungsradien beispielsweise von 1,5 mm zur reibarmen Gleitlagerung des Seils auf. Das Führungselement positioniert das Antriebskraftübertragungselement vorteilhaft derart zwischen den Griffelementen, dass das Antriebskraftübertragungselement kontaktlos zur Öffnungsfeder und innerhalb dieser geführt ist.

Darüber hinaus wird vorgeschlagen, dass das Antriebskraftübertragungselement berührungslos innerhalb der Öffnungsfeder angeordnet ist. Alternativ oder ergänzend wird vorgeschlagen, dass die Öffnungsfeder zumindest ein Führungselement aufweist, um das Antriebskraftübertragungselement reibarm zu führen. Das ermöglicht beispielsweise größere Öffnungswinkel der Griffelemente, ohne dass das Seil an der Öffnungsfeder, insbesondere scharfen Kanten der Öffnungsfeder, Schaden nimmt. Das Führungselement kann auch eine Hülse innerhalb der Öffnungsfeder, insbesondere eine Hülse in der Mitte der Öffnungsfeder sein, oder ein anderes mit oder durch die Federelemente der Öffnungsfeder gebildetes Reibminderungselement. Mittels beider Varianten kann der Verschleiß des Antriebskraftübertragungselements reduziert, eine potentielle Geräuschentwicklung minimiert und/oder die Lebensdauer des Antriebskraftübertragungselements maximiert werden.

Zudem wird vorgeschlagen, dass die Öffnungsfeder eine Evolutfeder, insbesondere eine Doppelevolutfeder ist. Vorteilhaft können dadurch Schmutz und Staub von dem Antriebskraftübertragungselement ferngehalten werden. Das Einklemmen von Haut beispielsweise zwischen Spiralfederwindungen oder zwischen Seil und Feder kann vermieden werden.

Des Weiteren wird vorgeschlagen, dass die Öffnungsfeder derart ausgebildet ist, dass sie den durch sie gebildeten Innenraum abdichtet, insbesondere vor Staub und/oder Feuchtigkeit abdichtet. Vorteilhaft wird dadurch eine Verwitterung des Antriebskraftübertragungselements und/oder Verschleiß vermieden. Schmutz und Staub oder Feuchtigkeit können zumindest nur erschwert an das Antriebskraftübertragungselement gelangen. Ein Eindringen von Schmutz und Staub, Feuchtigkeit oder dergleichen in die Griffelemente, die Griffgehäuse, Teile des Antriebsstrang, insbesondere die Seilwinde, die Rückstelleinheit oder die Kupplungseinheit der Schneidvorrichtung, die Steuereinheit, die Elektronik und/oder dergleichen wird zumindest erschwert. Dadurch wird die Schneidvorrichtung robuster.

Ferner wird vorgeschlagen, dass die Enden der Öffnungsfeder in Ausnehmungen der Griffelemente angeordnet sind. Die Enden der Öffnungsfeder sind korrespondierend zu Aufnahmen in den Ausnehmungen ausgebildet. Die Enden der Öffnungsfeder können in die Griffelemente eingelassen ausgebildet sein. Die Enden der Öffnungsfeder können auch in Buchsen, insbesondere den Führungshülsen anordenbar sein, welche in die Griffelemente eingelassen sind. Dadurch kann ein Verrutschen der Öffnungsfeder an den Griffelementen verhindert werden. Eine insbesondere reibungsarme Positionierung des Antriebskraftübertragungselements innerhalb der Öffnungsfeder kann garantiert werden. Buchsen können zudem die Festigkeit der Ausnehmungen bzw. Öffnungsfederaufnahme verbessern. Zudem kann das Kunststoffgehäuse dadurch schlanker dimensioniert werden.

Außerdem wird vorgeschlagen, dass die Schneidvorrichtung eine Gartenschere, insbesondere eine batteriebetriebene Gartenschere ist, welche einen manuell sowie einen manuell-maschinengestützten Betrieb ermöglicht. Vorteilhaft kann durch die Integration des Antriebskraftübertragungselements in die Öffnungsfeder die Schneidvorrichtung ergonomisch wie eine Schneidvorrichtung konzipiert sein, die lediglich einen rein manuellen Betrieb ermöglicht. Somit kann eine hohe Bedienerfreundlichkeit bereitgestellt werden.

### Zeichnung

Weitere Vorteile ergeben sich aus der folgenden Zeichnungsbeschreibung. In den Zeichnungen ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Schneidvorrichtung mit zwei Schneidelementen und zwei Griffelementen in einem geschlossenen Zustand,
- Fig. 2: die Schneidvorrichtung in einem geöffneten Zustand, wobei ein Kraftunterstützungsbetrieb deaktiviert ist, sowie eine Vergrößerungsdarstellung eines Kraftsensor der Schneidvorrichtung,
- Fig. 3: die Schneidvorrichtung gemäß Figur 2, wobei jedoch ein Kraftunterstützungsbetrieb aktiviert ist,
- Fig. 4: die Getriebeeinheit, die Kupplungseinheit, die Rückstelleinheit und die Seilwinde der Schneidvorrichtung in einer schematischen Schnittdarstellung Detail I,
- Fig. 5: die Kupplungseinheit und die Rückstelleinheit der Schneidvorrichtung in einer schematischen Schnittdarstellung Detail II,
- Fig. 6: die Kupplungseinheit der Schneidvorrichtung in einem eingekoppelten Zustand, bzw. im Unterstützungsbetrieb, in einer schematischen Schnittdarstellung in dem Schnitt IV-IV,
- Fig. 7: die Kupplungseinheit der Schneidvorrichtung in einem ausgekoppelten Zustand in einer schematischen Schnittdarstellung in dem Schnitt IV-IV,
- Fig. 8: die Kupplungseinheit der Schneidvorrichtung in einer schematischen Schnittdarstellung in dem Schnitt V-V,
- Fig. 9: die Rückstelleinheit der Schneidvorrichtung in einer schematischen Schnittdarstellung in dem Schnitt VI-VI,
- Fig. 10: ein Ablaufdiagramm eines Verfahrens zu einem Betrieb der Schneidvorrichtung,
- Fig. 11: eine Blockiervorrichtung in einer Schnittdarstellung Detail III sowie ein Teilausschnitt der Blockiervorrichtung, in einem ersten Zustand,
- Fig. 12: eine Blockiervorrichtung in einer Schnittdarstellung Detail III' sowie ein Teilausschnitt der Blockiervorrichtung, in einem zweiten Zustand,
- Fig. 13: eine Schneidelementaufnahme der Schneidvorrichtung in einer Schnittdarstellung im Schnitt III'-III',
- Fig. 14: ein Schneidelement für die Schneidvorrichtung in einer Draufsicht und einer Seitenansicht,

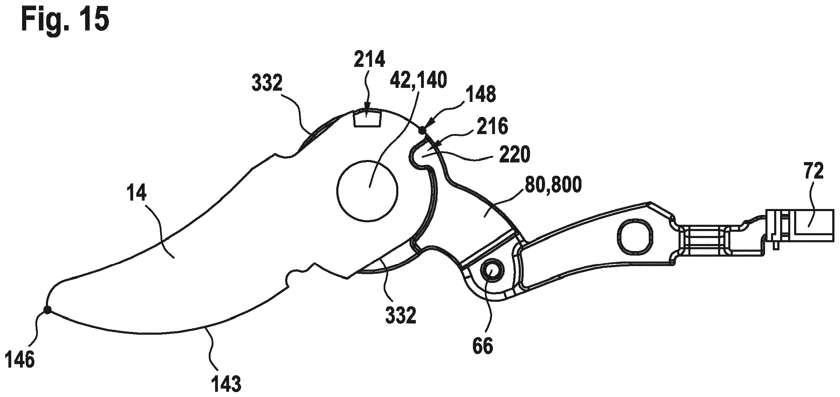

- Fig. 15: eine Darstellung des mit einem Kraftübertragungselement verbundenen Schneidelements,
- Fig. 16: eine Schnittdarstellung aufbauend auf Fig. 3, jedoch mit weiteren Details zum Antriebskraftübertragungselement und dessen Befestigung,
- Fig. 17: einen freigeschnittenen mittleren Ausschnitt von der Rückseite bezogen auf Fig. 15, und
- Fig. 18: das Antriebskraftübertragungselement in Form eines Seils mit Schlaufe und Knoten, sowie einer Darstellung eines Diamantknotens.

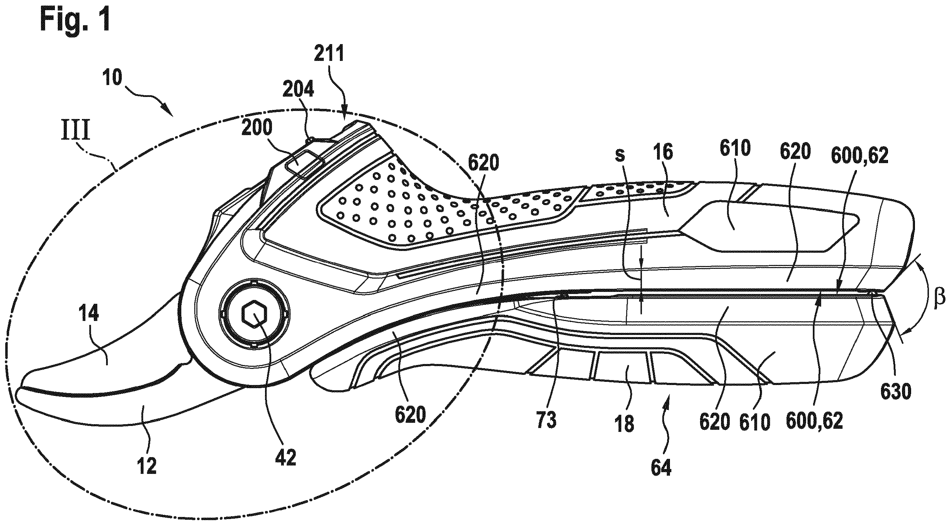

Figur 1 zeigt eine erfindungsgemäße Schneidvorrichtung 10. Die Schneidvorrichtung 10 ist als eine Gartenschneidvorrichtung ausgebildet. Die Schneidvorrichtung 10 ist als eine Gartenschere ausgebildet. Die Schneidvorrichtung ist als eine batteriebetriebene Schneidvorrichtung 10 ausgebildet. Grundsätzlich wäre jedoch auch eine andere Ausbildung der Schneidvorrichtung 10 denkbar, z.B. als Teppich oder Blechschere oder dergleichen.

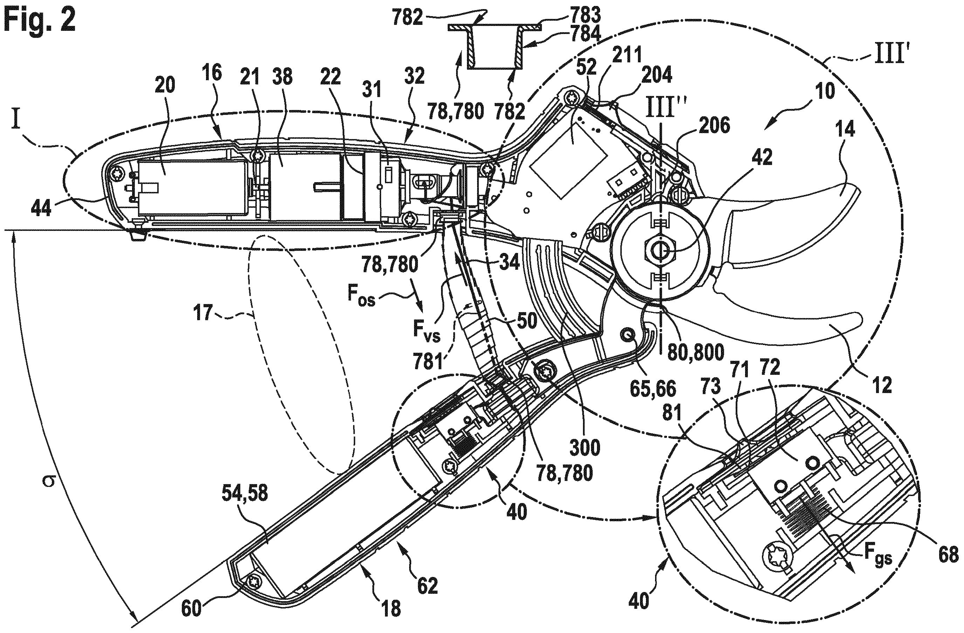

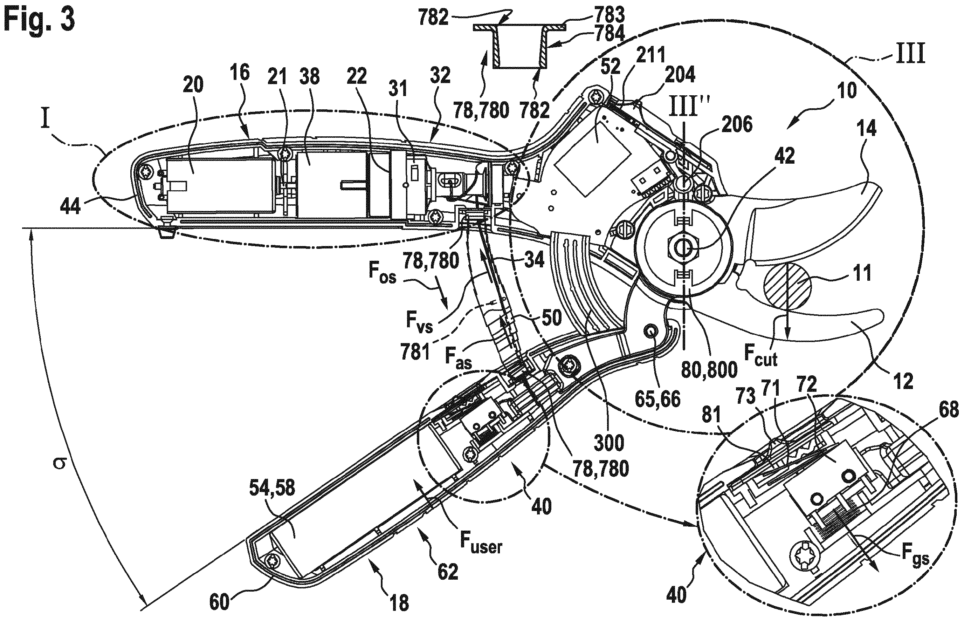

Die Schneidvorrichtung 10 weist zwei relativ zueinander bewegbare Schneidelemente 12, 14 auf (Figur 2, 3). Die Schneidelemente 12, 14 sind relativ zueinander schwenkbar. Ein erstes Schneidelement 12 ist dabei als passive Schneide mit einer Schneidkante ausgebildet. Das zweite Schneidelement 14 ist als aktive Schneide mit einer Klinge ausgebildet. Ferner weist die Schneidvorrichtung 10 zwei relativ zueinander bewegbare Griffelemente 16, 18 auf. Die Griffelemente 16, 18 sind relativ zueinander verschwenkbar bzw. drehbar. Die Griffelemente 16, 18 sind über zumindest ein Drehgelenk 42 verschwenkbar zueinander ausgebildet. Die Schneidelemente 12, 14 sind ebenfalls über das Drehgelenk 42 verschwenkbar zueinander ausgebildet. Das Drehgelenk 42 ist zwischen den Griffelementen 16, 18 und den Schneidelementen 12, 14 angeordnet. Das erstes Griffelement 16 und das erste Schneidelement 12 sind miteinander verbunden und auf verschiedenen Seiten des Drehgelenks 42 angeordnet. Ferner sind das zweite Griffelement 18 und das zweite Schneidelement 14 zumindest mittelbar miteinander verbunden und auf verschiedenen Seiten des Drehgelenks 42 angeordnet. Ein Kraftübertragungselement 800, hier in Form eines Hebels 80, verbindet das zweite Schneidelement 14 mit dem zweiten Griffelement 18. Die Griffelemente 16, 18 sind dazu vorgesehen, von einem Bediener umgriffen zu werden. Die Griffelemente 16, 18 sind dazu vorgesehen, von einem Bediener mit derselben Hand umgriffen zu werden. Grundsätzlich wäre jedoch auch denkbar, dass die Schneidvorrichtung 10 zu einer zweihändigen Bedienung vorgesehen ist. Hierbei könnten beispielsweise weitere Hebel- und oder Übersetzungselemente vorgesehen sein, um eine Schneidkraft F_{cut} zumindest teilweise relativ zur auf die Griffelemente 16, 18 aufgebrachten Kraft, insbesondere einer Bedienkraft Fᵤₛₑᵣ, zu verändern.

Des Weiteren ist zwischen den Griffelementen 16, 18 eine Öffnungsfeder 50 angeordnet. Die Öffnungsfeder 50 ist bezogen auf eine Längserstreckung der Griffelemente 16, 18 näher an dem Drehgelenk 42 als an einem freien Ende der Griffelemente 16, 18 angeordnet. Die Öffnungsfeder 50 ist als Druckfeder ausgebildet. Die Enden der Öffnungsfeder 50 stützten sich an dem ersten und zweiten Griffelement 16, 18 ab. Die Öffnungsfeder 50 ist dazu vorgesehen, die Griffelemente 16, 18 auseinander zu drücken und die Schneidvorrichtung 10 damit zu öffnen. Die Öffnungsfeder 50 ist ferner dazu vorgesehen, ein mit einer Antriebseinheit 20 in Wirkverbindung stehendes Antriebskraftübertragungselement 340, hier in Form eines Seils 34, in einem durch sie gebildeten Hohlraum aufzunehmen und/oder zu führen, wie weiter unten erläutert wird.

Zwischen der Öffnungsfeder 50 und dem Drehgelenk 42 ist ferner eine Schutzvorrichtung 300 angeordnet. Die Schutzvorrichtung 300 erstreckt sich zwischen den beiden Griffelementen 16, 18. Die Schutzvorrichtung 300 ist vorteilhaft fest mit dem zweiten Griffelement 18 verbunden. Die Schutzvorrichtung 300 ist ferner beweglich im ersten Griffelement 16 aufgenommen. Die Schutzvorrichtung kann beispielsweise als teleskopförmige Vorrichtung oder als starre Vorrichtung ausgebildet sein. Die Schutzvorrichtung 300 ist dazu vorgesehen, zumindest ein Kabel (nicht dargestellt) der Schneidvorrichtung 10, das beispielhaft von dem ersten in das zweite Griffelemente 16, 18 geführt ist, vor äußeren Einflüssen zu schützen und/oder sicher zwischen dem ersten und zweiten Griffelement 16, 18 aufzunehmen. Das Kabel ist beispielsweise ein Kabel für die elektrische Verbindung einer Energiespeichereinheit 54 und einer Steuereinheit 52 und/oder einer Antriebseinheit 20 oder ein Sensorkabel, welches von einem 401 zur Steuereinheit 52 geführt ist. Die Schutzvorrichtung 300 engt jedoch auch einen andernfalls freien Zwischenraum 301 zwischen dem Drehgelenk 42 und der Öffnungsfeder 50 ein bzw. füllt diesen zumindest teilweise aus, so dass beispielsweise ein Bediener versehentlich seinen Finger nur schwer in diesen Zwischenraum stecken kann oder sich ein Schnittgut, beispielsweise ein Zweig oder Ast nur schwer in diesem Zwischenraum verfangen kann. Insofern ist die Schutzvorrichtung 300 auch eine Sperrvorrichtung für den Zwischenraum 301. Der Zwischenraum 301 zwischen dem Drehgelenk 42 und der Öffnungsfeder 50 ist hierbei für eine Quetschung eines Objekts 17, insbesondere den Fingern oder der Haut eines Bedieners besonders gefährlich, da die in diesem Bereich wirkenden Kräfte aufgrund der Hebelverhältnisse bzw. Hebellänge der Griffelemente 16, 18 um das Drehgelenk 42 hoch sind. Somit kann durch die Schutzvorrichtung 300 ein geschütztes und sicheres Führen elektronischer Bauteile zwischen den Griffelementen 16, 18 sichergestellt werden. Außerdem dient die Schutzvorrichtung 300 der Verletzungsvermeidung.

Ferner weist die Schneidvorrichtung 10 eine Antriebseinheit 20 auf. Die Antriebseinheit 20 ist als ein Elektromotor ausgebildet. Der Elektromotor ist dazu vorgesehen mit einer Spannung kleiner 110 V, insbesondere mit einer Spannung von 1 V bis 36 V, bevorzugt 3,6 V versorgt zu werden. Die Antriebseinheit 20 ist in dem ersten Griffelement 16 angeordnet. Die Antriebseinheit 20 ist in einem Griffgehäuse 44 des Griffelements 16 angeordnet. Die Antriebseinheit 20 ist an einem den Schneidelementen 12, 14 abgewandten Ende des ersten Griffelements 16 angeordnet. Das Griffgehäuse 44 weist zwei Gehäuseschalen auf, in welchen die Antriebseinheit 20 fest aufgenommen ist. Die Antriebseinheit 20 ist in zumindest einem Betriebszustand dazu vorgesehen, eine Bewegung des zweiten Schneidelements 14 relativ zu dem ersten Schneidelement 12 zu unterstützen. Die Antriebseinheit 20 ist dazu vorgesehen, eine über die Griffelemente 16, 18 ausgeführte Schließbewegung der Schneidvorrichtung 10 bei schweren Schneidearbeiten zu unterstützen. Dadurch kann eine von einem Bediener benötigte Kraft Fᵤₛₑᵣ zur Betätigung der Schneidvorrichtung 10 reduziert werden.

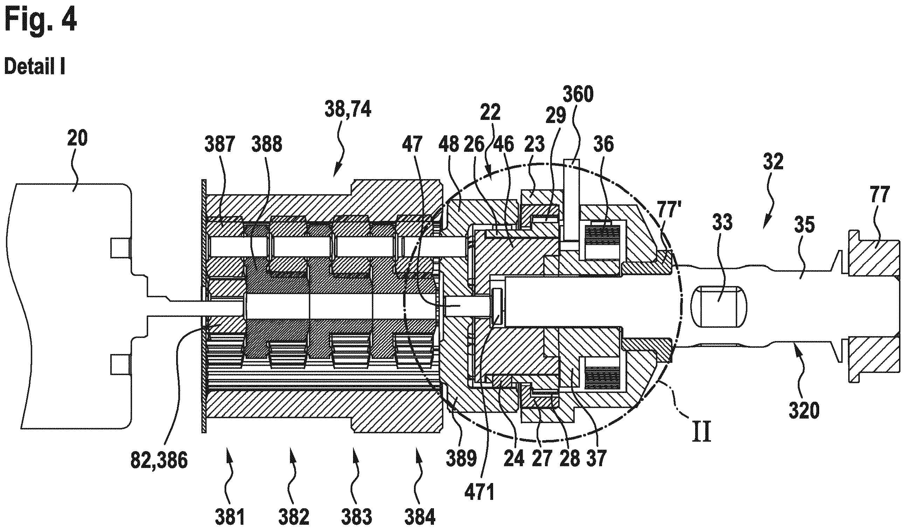

Des Weiteren weist die Schneidvorrichtung 10 eine Getriebeeinheit 38 auf. Die Getriebeeinheit 38 ist in dem ersten Griffelement 16 angeordnet. Die Getriebeeinheit 38 ist in dem Griffgehäuse 44 des Griffelements 16 angeordnet. Die Getriebeeinheit 38 ist auf einer den Schneidelementen 12, 14 zugewandten Seite der Antriebseinheit 20 angeordnet. Die Getriebeeinheit 38 ist im vorliegenden Fall direkt von der Antriebseinheit 20 angetrieben. Eine Kraftübertragung von der Antriebseinheit 20 auf die Getriebeeinheit 38 erfolgt über eine Abtriebswelle 21 der Abtriebseinheit 20 auf ein Ritzel 82 der Getriebeeinheit 38. Die Getriebeeinheit 38 ist als eine Zahnradgetriebeeinheit ausgebildet. Die Getriebeeinheit 38 weist zumindest eine Getriebestufe auf. Die Getriebeeinheit 38 weist vorteilhaft mehrere Getriebestufen auf. Die Getriebeeinheit 38 weist insbesondere ein bis sechs Getriebestufen, vorteilhaft vier Getriebestufen auf. Die zumindest eine Getriebestufe ist als Planetengetriebestufe 381, 382, 383, 384 ausgebildet. Die Getriebeeinheit 38 ist als eine Planetenradgetriebeeinheit ausgebildet (Figur 4). Die Übersetzung der Getriebeeinheit 38 weist vorteilhaft ein Verhältnis von 30:1 bis 300:1, insbesondere von 100:1 bis 150:1, insbesondere von 130:1 auf. Grundsätzlich wäre jedoch auch eine andere Übersetzung denkbar. Die Getriebeeinheit 38 ist über ein Gehäuse 74 der Getriebeeinheit 38 im Griffelement 16 gelagert. Das Gehäuse 74 der Getriebeeinheit 38 ist von zumindest einem Hohlrad 385 der zumindest einen Planetengetriebestufe 381, 382, 383, 384 gebildet. Das Gehäuse 74 der Getriebeeinheit 38 kann auch aus einzelnen seriell angeordneten Hohlrädern der Planetengetriebestufen 381, 382, 383, 384 gebildet sein. Die Kraftübertragung innerhalb der zumindest einen Planetengetriebestufe 381, 382, 383, 384 erfolgt jeweils von einem angetriebenen Sonnenrad 386 über Planeten 387 der jeweiligen Planetengetriebestufe, welche sich an einem feststehenden Hohlrad 381 abstützen, auf einen mit den Planeten 387 umlaufenden Planetenträger 388. Der Planetenträger 388 treibt wiederum ein Sonnenrad der nächsten Getriebestufe 382, 383, 384 an. Der Planetenträger 389 der letzten Getriebestufe 384 bildet den Abtrieb der Getriebeeinheit 38.

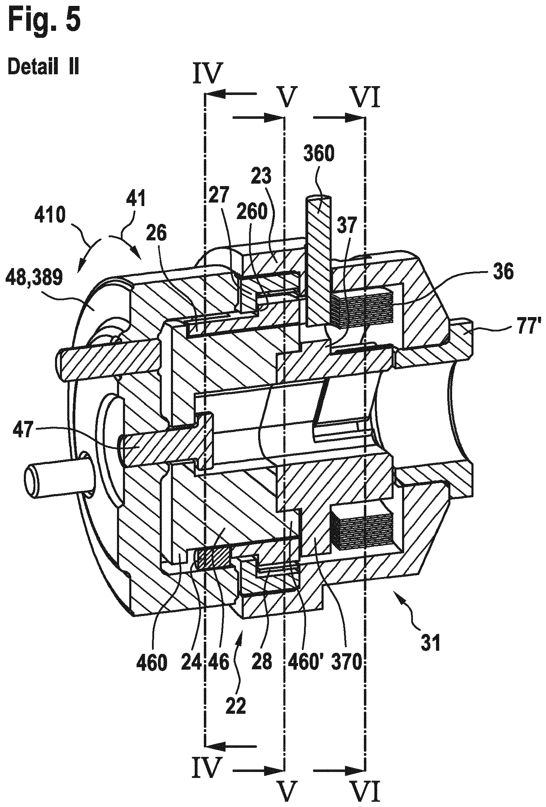

Die Schneidvorrichtung 10 weist ferner eine Kupplungseinheit 22 (Figur 4 und 5) auf. Die Kupplungseinheit 22 ist als selbstschaltende Kupplungseinheit 22 ausgebildet. Unter einer "selbstschaltenden Kupplungseinheit" soll in diesem Zusammenhang insbesondere eine Kupplungseinheit 22 verstanden werden, welche frei von externen, beispielsweise elektrischen Schaltsignalen, insbesondere einer Steuereinheit 52, betätigt wird. Vorzugsweise soll darunter eine Kupplungseinheit 22 verstanden werden, welche zu einem Wechsel zwischen den Kupplungszuständen frei von expliziten Schaltsignalen betätigt wird. Bevorzugt soll darunter eine Kupplungseinheit 22 verstanden werden, welche aufgrund von mechanischen Einflussfaktoren betätigt wird. Bevorzugt soll darunter eine Kupplungseinheit 22 verstanden werden, welche abhängig von zumindest einem Parameter einer Antriebs- und/oder Abtriebsseite betätigt wird. Die Kupplungseinheit 22 kann daher insbesondere drehzahlbetätigt, momentbetätigt, richtungsbetätigt und/oder kraftflussbetätigt ausgebildet sein. Die selbstschaltende Kupplungseinheit 22 ist als Freilaufkupplung ausgebildet. Unter einer "Freilaufkupplung" soll in diesem Zusammenhang insbesondere eine selbstschaltende Kupplung verstanden werden, welche richtungsbetätigt und/oder kraftflussbetätigt ausgebildet ist. Bevorzugt ist die Freilaufkupplung zumindest richtungsbetätigt. Vorzugsweise ist die Freilaufkupplung dazu vorgesehen, abhängig von einer Drehrichtung, insbesondere einer Antriebs- und/oder Abtriebsseite der Kupplungseinheit 22, und/oder abhängig von einer Richtung einer Krafteinwirkung auf die Freilaufkupplung zu öffnen und/oder zu schließen. Bei der Richtung der Krafteinwirkung kann beispielsweise unterschieden werden, ob die Kraft von der Antriebsseite oder von der Abtriebsseite auf die Freilaufkupplung wirkt. Bevorzugt ist die Freilaufkupplung dazu vorgesehen, die Antriebseinheit 20 in zumindest einem Betriebszustand abhängig von einer Drehrichtung, insbesondere einer Antriebs- und/oder Abtriebsseite, und/oder abhängig von einer Richtung einer Krafteinwirkung auf die Freilaufkupplung zu öffnen oder zu schließen. Die Kupplungseinheit 22 ist in dem ersten Griffelement 16 angeordnet. Die Kupplungseinheit 22 ist in dem Griffgehäuse 44 des ersten Griffelements 16 angeordnet. Die Kupplungseinheit 22 ist in zumindest einem Betriebszustand, in welchem die Antriebseinheit 20 deaktiviert ist, zu einer Entkopplung der Antriebseinheit 20 vorgesehen. Insbesondere soll beim Erreichen einer Endposition der Schneidvorrichtung 10 und/oder bei einem Nachlassen einer auf die Griffelement 16, 18 ausgeübten Bedienkraft Fᵤₛₑᵣ, die Antriebseinheit 20 selbsttätig deaktiviert und die Kupplungseinheit 22 bei Ausbleiben einer Drehbewegung der Antriebseinheit 20 selbsttätig entkoppelt werden. Unter einer "Entkopplung der Antriebseinheit" soll insbesondere eine Entkopplung der Antriebseinheit 20 von einem Schließmechanismus der Schneidvorrichtung 10 verstanden werden. Die Kupplungseinheit 22 ist in zumindest einem Betriebszustand, in welchem die Antriebseinheit 20 deaktiviert ist, auch zu einer Entkopplung der Getriebeeinheit 38 vorgesehen. Die Kupplungseinheit 22 ist zumindest zu einer Realisierung eines vollständigen Handbetriebs dazu vorgesehen, die Antriebseinheit 20 und/oder die Getriebeeinheit 38 zu entkoppeln. Unter einem "vollständigen Handbetrieb" soll in diesem Zusammenhang insbesondere ein Betriebszustand verstanden werden, bei welchem die Schneidvorrichtung 10 frei von einer Unterstützung der Antriebseinheit 20 betrieben wird. Vorzugsweise soll darunter ein Betriebszustand verstanden werden, bei welchem die Schneidvorrichtung 10 ausschließlich durch die aktive Kraft Fᵤₛₑᵣ eines Bedieners betrieben wird. Besonders bevorzugt soll darunter ein Betriebszustand verstanden werden in welchem die Antriebseinheit 20 entkoppelt ist und daher nicht zu einer Unterstützung einer Bewegung des zweiten Schneidelements 14 relativ zu dem ersten Schneidelement 12 genutzt werden kann. Dadurch kann insbesondere ein vorteilhaft leichtgängiger Handbetrieb der Schneidvorrichtung ermöglicht werden. Insbesondere kann dadurch erreicht werden, dass die Schneidvorrichtung 10 vorteilhaft auch ohne die Antriebseinheit 20, wie beispielsweise bei einer fehlenden Energieversorgung und/oder bei leichten Schneidearbeiten, genutzt werden kann. Die Kupplungseinheit 22 ist vorteilhaft zu einer Beschleunigung der Öffnungs- bzw. Spreizbewegung der zwei Schneidelemente 12, 14 bzw. der zwei Griffelemente 16, 18 vorgesehen. Die Kupplungseinheit 22 ermöglicht ein beschleunigtes Auf- und/oder Abrollen eines Antriebskraftübertragungselements 340, hier in Form eines Seils 34, von einer Seilwinde 32 bzw. Seiltrommel 320 einer Seilwinde 32, bei einem Öffnen- bzw. Spreizen der Schneidvorrichtung 10, wie weiter unten beschrieben wird. Dadurch kann die Bediengeschwindigkeit der Schneidvorrichtung bzw. die Bearbeitungsgeschwindigkeit gesteigert und der Bedienkomfort erhöht werden. Die Anzahl möglichen Schnitten pro Zeiteinheit kann gesteigert werden. Nach einem vorangehenden Schließvorgang der Schneidvorrichtung 10, bei dem zumindest die Antriebseinheit 20 eine Bewegung des zweiten Schneidelements 14 relativ zu dem ersten Schneidelement 12 unterstützt, ist die Kupplungseinheit 22 dazu vorgesehen die Antriebseinheit 20 zu entkoppeln und bei einer erneuten Schließbewegung mit motorischer Kraftunterstützung wieder zu koppeln.

Die Kupplungseinheit 22 weist ein inneres Drehelement 46 und ein äußeres Drehelement 48 auf. Das innere Drehelement 46 ist in zumindest einem Zustand relativ zum äußeren Drehelement 48 drehbar. Das äußere Drehelement 48 ist vorteilhaft mit dem Abtrieb der Getriebeeinheit 38 verbunden. Ein Teil der Kupplungseinheit 22 bildet vorteilhaft einen Teil, insbesondere der letzten Getriebestufe 384 der Getriebeeinheit 38 aus. Das äußere Drehelement 48 ist vorteilhaft einstückig mit dem einen Teil der Getriebeeinheit 38, insbesondere dem Planetenträger 389 der letzten Getriebestufe 384 und/oder dem Abtrieb der Getriebeeinheit 38 ausgebildet. Das innere Drehelement 46 und das äußere Drehelement 48 sind mittels eines insbesondere koaxialen Verbindungselements 47 zueinander gesichert. Das Verbindungselement 47 ist als Verbindungsstift ausgebildet. Das Verbindungselement 47 sichert das innere und äußere Drehelement 46, 48 zumindest axial und/oder radial zueinander. Die Verbindungswelle 47 ist bevorzugt fest, insbesondere reibschlüssig mit dem äußeren Drehelement 48 und zumindest drehspielbehaftet mit dem inneren Drehelement 46 verbunden. Die Verbindungswelle 47 ist am innere Drehelement 46 gleitgelagert aufgenommen. Die Verbindungswelle 47 weist zur axialen Sicherung des inneren Drehelements 46 gegenüber dem äußeren Drehelement 48 ferner eine Schulter 471 auf. Die Schulter 471 stützt sich an einer insbesondere felgenartigen Fläche des inneren Drehelements 46 ab.

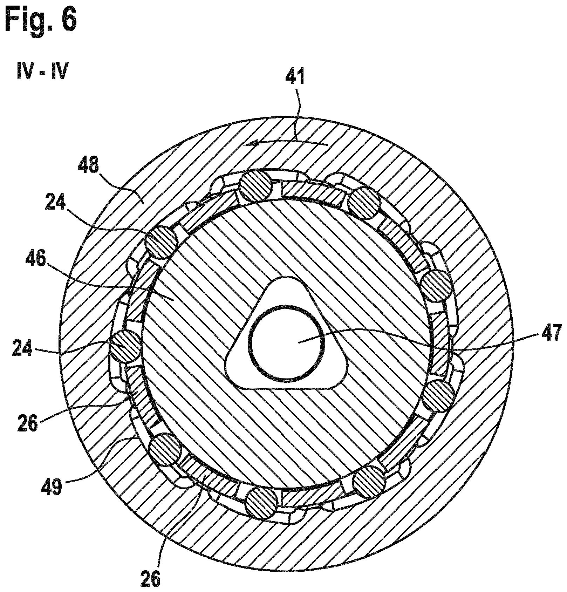

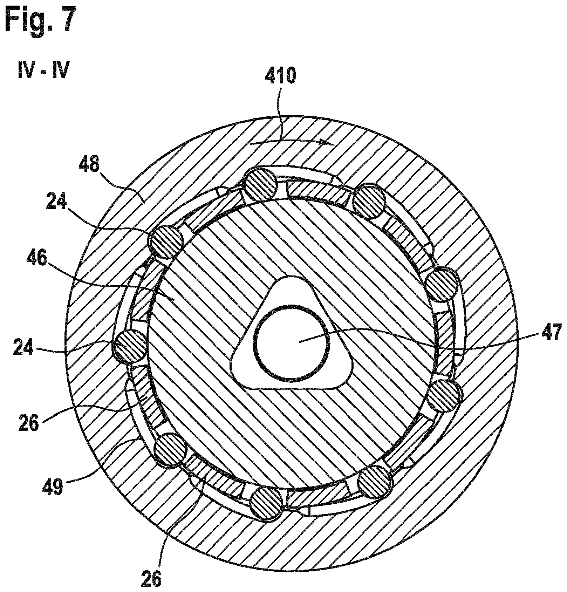

Ferner weist die Kupplungseinheit 22 mehrere Klemmkörper 24 auf (Figur 6 und 7). Unter einem "Klemmkörper" soll in diesem Zusammenhang insbesondere ein Element der Kupplungseinheit 22 verstanden werden, welches in zumindest einem Betriebszustand, insbesondere in einem geschlossenen Zustand der Kupplungseinheit 22, dazu vorgesehen ist, zwischen zwei drehbar zueinander gelagerten Drehelementen der Kupplungseinheit 22 zu verklemmen. Die Klemmkörper 24 sind zwischen dem inneren Drehelement 46 und dem äußeren Drehelement 48 angeordnet. Die Klemmkörper 24 sind in Umfangsrichtung hintereinander um das innere Drehelement 46 angeordnet. Die Klemmkörper 24 sind als Zylinder und/oder Rolle, insbesondere als Zylinderrolle ausgebildet. Grundsätzlich wäre jedoch auch eine andere Ausbildung der Klemmkörper 24, beispielsweise als Kugel oder Tonne oder dergleichen, denkbar. Das äußere Drehelement 48 weist an seiner Innenseite mehrere in Umfangsrichtung aufeinanderfolgende Rampen 49 auf. Eine Anzahl an Rampen 49 entspricht dabei einer Anzahl Klemmkörper 24. Die Klemmkörper 24 sind beweglich zwischen den Rampen 49 angeordnet, wobei bei einer Drehung des äußeren Drehelements 48 eine Mitnahme der Klemmkörper 24 erfolgt. Wird das äußere Drehelement 48 in Umfangsrichtung entgegen einer Rampensteigung angetrieben, rollen die Klemmkörper 24 in einen enger zulaufenden Bereich zwischen dem äußeren Drehelement 48 und dem inneren Drehelement 46 und werden gegen das innere Drehelement 46 gedrückt. Dies erfolgt bei einem Antrieb des äußeren Drehelements 48 in Antriebsrichtung 41. Dabei soll unter einer "Antriebsrichtung" insbesondere eine Drehrichtung der Antriebseinheit 20 verstanden werden, in welche die Antriebseinheit 20 in einem regulären Betrieb, insbesondere zu einer Unterstützung einer Schneidbewegung, dreht. Es erfolgt eine Drehmitnahme des inneren Drehelements 46. Die Kupplungseinheit 22 ist in diesem Zustand geschlossen, wie dies in der Figur 6 dargestellt ist. Wird dagegen das innere Drehelement 46 angetrieben, unabhängig von einer Drehrichtung, bleiben die Klemmkörper 24 in einem Tal der Rampen 49 oder rollen zurück in dieses und sind zu dem äußeren Drehelement 48 beabstandet. Die Klemmkörper 24 sind frei zwischen den Drehelementen 46, 48 angeordnet. Es erfolgt keine Drehmitnahme. Die Kupplungseinheit 22 ist in diesem Zustand geöffnet, wie dies in der Figur 7 dargestellt ist. Das äußere Drehelement 46 wird über die Getriebeeinheit 38 von der Antriebseinheit 20 angetrieben. Die Getriebeeinheit 38 und die Antriebseinheit 20 bilden eine Antriebsseite der Kupplungseinheit 22. Wird das innere Drehelement 46 entgegen einer Antriebsrichtung 41 angetrieben, werden die Klemmkörper 24 in das Tal der Rampen 49 bewegt und sind ebenfalls frei zwischen den Drehelementen 46, 48 angeordnet. Die selbstschaltenden Kupplungseinheit 22 ist räumlich zwischen den Schneidelementen 12, 14 und der Antriebseinheit 20 angeordnet. Die selbstschaltenden Kupplungseinheit 22 ist räumlich zwischen einer Seilwinde 32 und der Getriebeeinheit 38 angeordnet. Zumindest die Seilwinde 32 bzw. ein Abtriebselement der Weilwinde 32 bildet einen Abtrieb der Kupplungseinheit 22

Die selbstschaltende Kupplungseinheit 22 weist einen die Klemmkörper 24 aufnehmenden Käfig 26 auf (Figur 6, 7). Der Käfig 26 nimmt die Klemmkörper 24 in voneinander getrennten Aufnahmebereichen auf. Der Käfig 26 dient zu einer Positionierung und Führung der Klemmkörper 24 in Umfangsrichtung. Der Käfig 26 ist dazu vorgesehen, die Klemmkörper 24 in Umfangsrichtung zueinander zu beabstanden und gleichmäßig zu verteilen. Insbesondere kann bei mehreren Klemmkörpern 24 erreicht werden, dass die Klemmkörper 24 in Umfangsrichtung dieselbe Bewegung vollführen. Es kann vorzugsweise ein kontrolliertes Klemmen der Klemmkörper 24 ermöglicht werden. Der Käfig 26 ist teilweise ringförmig ausgebildet. Der Käfig 26 ist teilweise zylindrisch ausgebildet. Auf einem zylindrischen Grundkörper des Käfigs 26 sind mehrere axial auskragende, kreissegmentförmige Stege aufgebracht, welche sich in Umfangsrichtung zwischen den Klemmkörpern 24 erstrecken. Der Käfig 26 ist auf dem inneren Drehelement 46 der Kupplungseinheit 22 gelagert.

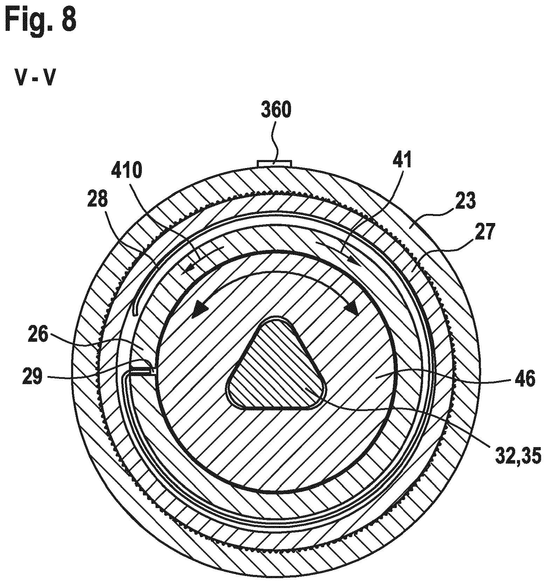

Ferner weist die Kupplungseinheit 22 ein Bremselement 28 auf, welches zu einem Abbremsen des Käfigs 26 vorgesehen ist (Figur 8). Das Bremselement 28 ist als ein Federelement ausgebildet. Das Bremselement 28 ist als eine Art Spiralfeder ausgebildet. Das Bremselement 28 ist als eine Schlingfeder ausgebildet. Das Bremselement 28 ist mit einem Ende fest in einer Ausnehmung 29 des Käfigs 26 angeordnet. Das Bremselement 28 erstreckt sich zumindest teilweise in Umfangsrichtung spiralförmig um den Käfig 26. Das Bremselement 28 umschlingt den Käfig 26. Eine äußere Fläche des Bremselements 28 stützt sich zumindest teilweise an einem das Bremselement 28 bzw. den Käfig 26 radial umgebenden Sicherungselement 27 ab. Das Sicherungselement 27 ist als Sicherungsring oder Fixierring ausgebildet. Das Sicherungselement 27 ist feststehend an der Kupplungseinheit 22 angeordnet. Das Sicherungselement 27 ist fest, insbesondere zumindest rotationsfest, bevorzugt reibschlüssig mit dem Gehäuse 23 der Kupplungseinheit 22 verbunden. Zur besseren Kraftübertragung ist die Innenfläche des Gehäuses 23 im Bereich des zur Anordnung des Sicherungselements 27 vorgesehenen Bereichs strukturiert, insbesondere geriffelt. Das Bremselement 28 ermöglicht eine Drehung des Käfigs 26 relativ zum feststehenden Griffgehäuse 44 in einer Drehrichtung, insbesondere einer Antriebsdrehrichtung und sperrt eine Drehung des Käfigs 26 in der entgegengesetzten Drehrichtung. Das Bremselement 28 ermöglicht eine Drehung des Käfigs 26 relativ zum Gehäuse 23 der Kupplungseinheit 22 bzw. zum Sicherungselement 27 in einer Richtung und sperrt eine Drehung des Käfigs 26 in der entgegengesetzten Drehrichtung. Zumindest ein Teil, insbesondere der Großteil der äußeren Fläche des Bremselements 28 drückt mittels einer Federkraft radial nach außen gegen das Sicherungselement 27. Das Bremselement 28 ist dazu ausgebildet einen Freilauf des Käfigs 26 zu ermöglichen. Das Bremselement 28 ist dazu ausgebildet den Käfig 26 in Gegenantriebsrichtung 410 abzubremsen bzw. eine Drehung zu hemmen oder den Käfig zu fixieren und in Antriebsrichtung 41 ein drehen des Käfigs 26 relativ zur äußeren Abstützfläche bzw. dem Sicherungselement 27 zu ermöglichen, insbesondere reibungsarm zu ermöglichen. Diese Art Schlingkupplung schleppt bei einer Rotation des Käfigs 26 in Antriebsrichtung 41 ihr freies Ende mit und gleitet dabei auf der Innenfläche des Sicherungselements 27. Bei einer Drehung in Gegenantriebsrichtung 410 spreizt sich hingegen diese Art Schlingkupplung und bremst zumindest bzw. blockiert den Käfig 26 relativ zum Sicherungselement 27. Das Bremselement 28 ist dazu vorgesehen, ein ungewolltes verdrehen des Käfigs 26 zu verhindern. Das Bremselement 28 ist dazu vorgesehen, ein Verdrehen des Käfigs 26 bis zu einer Krafteinwirkung, insbesondere einer Krafteinwirkung durch die Antriebseinheit 20 zu unterbinden. Das Bremselement 28 kann auch als ein Sperrklinkenelement, ein anderes einen Freilauf erzeugendes Element oder dergleichen ausgebildet sein.

Ferner weist das innere Drehelement 46 zumindest ein, insbesondere zwei Formschlusselement 460, 460' auf. Das Formschlusselement ist als Flansch ausgebildet, kann aber auch eine andere Form aufweisen. Der Käfig 26 weist ebenfalls ein Formschlusselement 260 auf. Der Drehkörper 370 weist ein Formschlusselement 370 auf. Das Sicherungselement 27 weist zumindest ein Formschlusselement 270. Zumindest über die Formschlusselemente 260, 270, 370, 460, 460' sowie mitunter reibschlüssige Verbindungen zwischen Drehkörper 37 und innerem Drehelement 46 sind Elemente der Kupplungseinheit 22 und der Rückstelleinheit 31 zueinander gesichert verbunden. Somit ist eine axiale Sicherung dieser Elemente zueinander sichergestellt. Die axiale Sicherung kann aber auch auf andere Weise erfolgen. Eine zusätzliche Lagerung beispielsweise durch gleitoder Rollenlager kann vorteilhaft entfallen. Zudem ist über das Verbindungselement 47 auch das äußere Drehelement 48 zum inneren Drehelement 46 axial gesichert und somit über das Sicherungselement 27 axial zur Kupplungseinheit 22 positioniert.

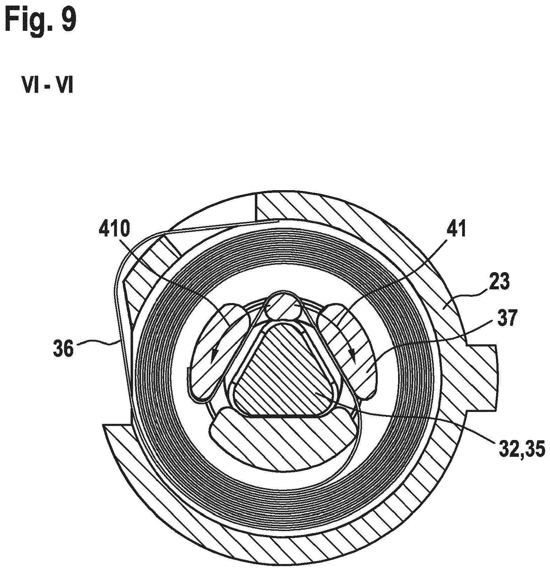

Des Weiteren weist die Schneidvorrichtung 10 eine Rückstelleinheit 31 auf (Figur 9). Die Rückstelleinheit 31 ist in dem ersten Griffelement 16 angeordnet. Die Rückstelleinheit 31 ist an, vorteilhaft in dem Griffgehäuse 44 des Griffelements 16 angeordnet. Die Rückstelleinheit 31 ist in der Kupplungseinheit 22 angeordnet. Vorzugsweise ist die Rückstelleinheit 31 dazu vorgesehen, eine Spannung des Seils zu gewährleisten. Bevorzugt ist die Rückstelleinheit 31 dazu vorgesehen, die Seilwinde 32 mit einer Kraft, insbesondere mit einer Kraft in Umfangsrichtung zu beaufschlagen. Besonders bevorzugt ist die Rückstelleinheit 31 dazu vorgesehen, über die Seilwinde 32 eine Zugkraft auf das Seil 34 zu bewirken. Insbesondere soll über die Rückstelleinheit 31 das Seil 34 permanent auf Spannung gehalten werden. Vorzugsweise bewirkt die Rückstelleinheit 31 eine Rückstellkraft Fᵥₛ, die geringer ist, als eine Öffnungskraft Fₒₛ der Öffnungsfeder 50 (Figur 3). Durch die Rückstelleinheit 31 kann insbesondere auch bei einem vollständigen Handbetrieb eine Spannung des Seils 34 gewährleistet werden. So kann vorteilhaft ein ungewolltes verknoten des Seils 34 verhindert werden. Zudem kann antriebslos ein Aufwickeln des Seils 34 gewährleistet werden. Die Rückstelleinheit 31 weist ein Federelement 36 und einen Drehkörper 37 auf. Ein Ende des Federelements 36 ist mit dem Gehäuse 23 der Kupplungseinheit 22 fest verbunden. Das andere Ende des Federelements 36 ist mit dem Drehkörper 37 fest verbunden. Das Federelement 36 ist radial zwischen dem Gehäuse 23 der Kupplungseinheit 22 und dem Drehkörper 37 angeordnet. Das Federelement 36 umgibt den Drehkörper 37 radial. Das Federelement 36 ist mehrfach um den Drehkörper 37 gewickelt. Die Rückstelleinheit 31 ist insbesondere über den Drehköper 37 zumindest mittelbar mit der Seilwinde 32 verbunden. Der Drehkörper 37 ist über das Federelement 36 relativ zum Griffgehäuse 44 bzw. dem Gehäuse 23 der Kupplungseinheit 22 begrenzt drehbar fixiert. Der Drehkörper 37 ist über eine Welle 35 mit der Seilwinde 32 verbunden. Der Drehkörper 37 ist vorteilhaft ferner über die Welle 35 mit dem inneren Drehelement 46 der Kupplungseinheit 22 drehfest verbunden. Der Drehköper 37 kann über zumindest ein radiales und/oder axiales Formschlusselement mit dem inneren Drehelement 46 verbunden sein. Der Drehkörper 37 weist eine koaxiale Ausnehmung auf. Die Ausnehmung ist polygonal ausgebildet. Die Innenkontur der Ausnehmung ist korrespondierend zur Außenkontur der Welle 35 ausgebildete. Das Federelement 36 ist dazu vorgesehen die Welle 35 mit einer Kraft in Antriebsrichtung 41 zu beaufschlagen. Das Federelement 36 ist dazu vorgesehen das innere Drehelement 46 mit einer Kraft in Antriebsrichtung 41 zu beaufschlagen. Das Federelement 36 ist dazu vorgesehen, über die Seilwinde 32 eine Zugkraft auf das Seil 34 zu übertragen. Über das Federelement 36 soll das Seil 34 permanent auf Spannung, insbesondere Zugspannung gehalten werden. Zum Vereinfachung der Montage der Schneidvorrichtung 10, oder zumindest der Kupplungs- und Rückstelleinheit 22, 31 kann das Federelement 36 vorgespannt werden und mit einer Montagehilfe 360 relativ zum Gehäuse 23 der Kupplungseinheit 23 fixiert werden. So kann zumindest die Rückstelleinheit 31, insbesondere in Verbindung mit der Kupplungseinheit 22 als Baugruppe vorgespannt verbaut werden.
Über das Federelement 36 kann alternativ ferner die Kupplungseinheit 22 geöffnet werden, sobald der Antriebsmotor deaktiviert ist. Über das Federelement 36 kann so das innere Drehelement 46 in Antriebsrichtung 41 gedreht werden wodurch wiederum der Käfig 26 über das Bremselement 28 abgebremst werden kann, sobald der Antriebsmotor 20 deaktiviert ist. Vorteilhaft kann so eine alternative Drehrichtungsumkehr des Antriebsmotors 20 zum Öffnen der Kupplungseinheit 22 vermieden werden.

Ferner weist die Schneidvorrichtung 10 eine von der Antriebseinheit 20 antreibbare Seilwinde 32 auf. Die Seilwinde 32 ist in dem ersten Griffelement 16 angeordnet. Vorzugsweise ist die Seilwinde 32 über die Kupplungseinheit 22 von der Antriebseinheit 20 antreibbar ausgebildet. Bevorzugt ist die Seilwinde 32 in zumindest einem Betriebszustand über die Kupplungseinheit 22 von der Antriebseinheit 20 entkoppelbar ausgebildet. Durch die Seilwinde 32 kann eine vorteilhafte Krafteinwirkung der Antriebseinheit 20 erreicht werden. Insbesondere kann dadurch konstruktiv einfach eine Unterstützung einer Bewegung des zweiten Schneidelements 14 relativ zu dem ersten Schneidelement 12 ermöglicht werden. Ein Bediener kann so vorteilhaft von der Antriebseinheit 20 bei einer Schließbewegung unterstützt werden. Ferner kann durch die Krafteinwirkung der Antriebseinheit an den Griffelementen 16, 18 ein vorteilhaft hohes Moment bereitgestellt werden. Dadurch kann wiederum eine Leistung der Antriebseinheit 20 gering gehalten werden. Die Seilwinde 32 ist in dem Griffgehäuse 44 des ersten Griffelements 16 angeordnet. Die Seilwinde 32 ist auf einer den Schneidelementen 12, 14 zugewandten Seite der Kupplungseinheit 22 angeordnet. Die Seilwinde 32 ist mit der Welle 35 verbunden. Die Welle 35 ist vorteilhaft einstückig mit der Seilwinde 32 ausgebildet. Die Welle 35 ist über Lager, insbesondere über Gleitlager 77, 77' gelagert. Das den Schneidelementen 12, 14 zugewandte Lager 77 stützt sich im Griffgehäuse 44 des Griffelements 16 ab. Das dem Schneidelement 12, 14 abgewandte Lager 77' stützt sich im Gehäuse 23 der Kupplungseinheit 22 ab. Die Welle 35 ist mit der Kupplungseinheit 22 verbunden. Die Welle 35 ist mit dem inneren Drehelement 46 drehfest verbunden. Die Welle 35 ist ferner mit dem Drehkörper 37 drehfest verbunden. Die Welle 35 weist ein polygonales Profil auf. Sie kann auch ein anders Profil zum Verbinden mit der Kupplungseinheit 22 beispielsweise ein quadratisches, ein Nut und Feder Profil oder ein anderes Wellen-Naben-Verbindungsprofil aufweisen. Dadurch dass die Seilwinde 32 direkt mit dem inneren Drehelement 46 der Kupplungseinheit 22 und dem Drehkörper 37 der Rückstelleinheit verbunden ist und zudem diese Beiden Elemente untereinander verbindet, baut die Vorrichtung sehr kompakt. Die selbstschaltende Kupplungseinheit 22 kann auch teilweise in die Seilwinde 32 integriert sein. Die Kupplungseinheit 22 kann teilweise von der Seilwinde 32 umgriffen werden. Ferner bildet die Seilwinde 32 eine Abtriebsseite der Kupplungseinheit 22 aus. Die Seilwinde 32 weist eine Seiltrommel 320 auf. Die Seiltrommel 320 ist im Wesentlichen zylindrisch ausgebildet. Eine axiale Erstreckung der Seiltrommel 320 kann dazu vorgesehen sein das Seil 34 lediglich einlagig aufzurollen. Prinzipiell ist aber eine mehrlagige Aufrollung ebenso möglich. Durch die Beschichtung des Seils 34 kann dies zudem ohne Verschleiß erfolgen. Die axiale Erstreckung der Seiltrommel 320 beträgt vorteilhaft 5-15 mm, insbesondere 6 mm. Zur leichteren Positionierung des Seils 34 auf der Seiltrommel 320 bildet diese zumindest an der dem Drehgelenk 42 zugewandten Seite eine Schulter aus. Der Durchmesser der Seiltrommel 320 beträgt vorteilhaft weniger als 10 mm, insbesondere 7 mm. Die Seilwinde 32 weist zur Fixierung des Seils 34 eine Aufnahme 33 auf. Die Aufnahme 33 ist als Öffnung bzw. als Durchgangsloch in Querachsrichtung der Seilwinde 32 bzw. Welle 35 ausgebildet. Das Durchgangsloch weist einen zumindest im Wesentlichen rechteckigen Querschnitt auf, kann aber ebenso rund sein. Die Seiten des Rechtecks können bogenförmig abgerundet sein. Die Aufnahme 33 kann auch oval, rund, eckig oder dergleichen ausgebildet sein. Die Übergänge des Durchgangslochs zur Oberfläche der Seilwinde 32 sind abgerundet ausgebildet. Dadurch erleidet das Seil 34 beim Aufrollen keine Verletzungen. Die Aufnahme 33 kann als Klemmsitz ausgebildet sein. Das Durchgangsloch ist in Abstimmung auf das Seil 34 bezüglich seiner Dimensionierung derart gewählt, dass es ein Durchführen einer Schlaufe ermöglicht. Hingegen ist es in Abstimmung auf das Seil 34 derart dimensioniert, dass es einer Verdickung im Seil, insbesondere einen Konten, ganz besonders bevorzugt einen an einem Seilende angebrachten Diamantknoten, keine Durchführung ermöglicht. Der Knoten wird somit zumindest Formschlüssig an der Aufnahme 33 gehalten. Zudem kann er auch reibschlüssig gehalten werden. Durch die Abrundungen der Aufnahme 33 bildet sich unter Belastung des Seils 34 einen Klemmsitz aus. Dieser verfestigt die Stabilität des Knotens, lässt ihn weniger überstehen und/oder verhindert ein ungewolltes Öffnen. Im Bereich der Aufnahme 33 weist die Welle 35 vorteilhaft einen größeren Durchmesser als im Bereich der Seiltrommel 320 auf. Dieser beträgt vorteilhaft 8 mm. Prinzipiell kann aber auch der Bereich der Aufnahme 33 als Seiltrommel fungieren.

Die Schneidvorrichtung 10 weist zudem das Seil 34 auf. Bevorzugt ist das Seil 34 an dem zweiten Griffelement 18 mittels der Schlaufe am Hebel 80 fixiert. Am ersten Griffelement 16 ist es über den Knoten und die Aufnahme 33 an der Seilwinde 32 befestigt. Vorzugsweise ist das Seil 34 bezogen auf die Griffelemente 16, 18 näher an dem Drehgelenk 42 als an den von dem Drehgelenk 42 beabstandeten Enden der Griffelemente 16, 18 angeordnet, insbesondere näher als 10 cm, vorzugsweise zwischen 6 und 8 cm von dem Drehgelenk 42. Es ist zwischen den Griffelementen 16, 18 aufgespannt. Das Seil 34 kann in dem ersten Griffelement 16 und/oder zweiten Griffelement 18 über ein Führungselement 780 insb. eine Führungshülse 78 gelagert sein. Die Führungshülse 78 ist vorteilhaft hohlzylindrisch ausgebildet und weist einseitig einen Flansch 783 auf. Der Flansch 783 kann vorteilhaft zur Fixierung am ersten bzw. zweiten Griffelement 16, 18 vorgesehen sein. Ferner kann das Führungselement 780 die Öffnungsfeder 50 am ersten und/oder zweiten Griffelement 16, 18 positionieren und/oder fixieren. Der Zylinder der Führungshülse 78 ist insbesondere quer zur Längserstreckung des Griffelements 16, 18, in Richtung des gegenüberliegenden Griffelements 16, 18 orientiert. Eine Außenfläche 784 des Zylinders stützt die Innenseite bzw. Innenfläche der Öffnungsfeder 50. An zumindest einer Öffnung, insbesondere an beiden Öffnungen der Führungshülse 78 ist jeweils eine Rundung 782 vorgesehen. Ein Radius der Rundung 782 beträgt vorteilhaft 1,5 mm. Dies trägt zur reibarmen Lagerung des Seils 34 bei. Ferner kann sich der Innendurchmesser des Zylinders in Richtung des Flanschs 783 konisch weiten. Dadurch berührt das Seil 34 das Führungselement 780 vorteilhaft nur an der dem jeweils anderen Griffelement 16, 18 zugewandten Öffnung des Führungselements 780, was ebenfalls einer reibarmen Lagerung des Seils 34 am Führungselement 780 sowie einer berührungsfreien Lagerung des Seils 34 innerhalb der Öffnungsfeder 50 dient und/oder ein Aufrollen des Seils 34 über die gesamte Trommelbreite quasi geführt ermöglicht. Das Seil 34 ist zwischen den zwei Griffelementen 16, 18 aufgespannt. Die Enden der Öffnungsfeder 50 sind an den Führungshülsen 78 im ersten und zweiten Griffelement 16, 18 aufgenommen. Die Führungshülsen 78 können aus einem festeren Werkstoff als die Griffelement 16, 18 gebildet sein. Das Seil 34 ist innerhalb der Öffnungsfeder 50 geführt. Die Öffnungsfeder 50 ist als Evolutfeder, insbesondere als Doppelevolutfeder ausgebildet. Bevorzugt weist die Öffnungsfeder 50 im entspannten Zustand eine Länge von kleiner 100 mm, insbesondre 70 mm auf. Im komprimierten Zustand weist die Öffnungsfeder 50 eine Länge von kleiner als 25 mm, insbesondere 17 mm auf. Die Öffnungsfeder 50 weist im komprimierten Zustand beispielhaft eine Öffnungskraft von kleiner 100 N, insbesondere 32 N auf. Ein Durchmesser der Feder beträgt beispielhaft an den Enden 4 bis 8 mm, insbesondere 6,6 mm und in der Mitte der Öffnungsfeder 50 rund 10 bis 15 mm, insbesondere 11 mm. Die Öffnungsfeder 50 ist vorteilhaft dazu vorgesehen einen Öffnungswinkel σ der Griffelemente 16, 18 um das Drehgelenk 42 von bis zu 70°, insbesondere von bis zu 50° und besonders bevorzugt von bis zu 35° zu ermöglichen.

Das Seil 34 kann innerhalb der Öffnungsfeder 50 reibungsarm gelagert sein. Das Seil 34 kann innerhalb der Öffnungsfeder 50 verletzungsarm geführt sein, so dass eine Verletzung des Seils durch beispielsweise scharfe Kanten der Öffnungsfeder 50 vermieden wird. Die Öffnungsfeder 50 kann zusätzliche Führungselemente 781 aufweisen, welche das Seil 34 schützend und reibungsarm innerhalb der Öffnungsfeder 50 führen. Das Seil 34 ist vorteilhaft aus Polyethylen, insbesondere aus Polyethylen mit ultrahoher molarer Masse (UHMW-PE) hergestellt. Es ist ein Dyneema® Seil 34. Es weist vorteilhaft einen Durchmesser von 2 mm auf und hält beispielsweise einer wiederholten Zugkraft von >1000 N sowie dem Aufrollen auf der Seiltrommel 320 stand. Ein derartiges Seil 34 ist besonders abriebfest. Dazu kann es eine Beschichtung aufweisen. Es kann ohne weitere reibungs- oder verletzungsmindernde Elemente direkt in der Öffnungsfeder 50 angeordnet werden bzw. durch die Öffnungsfeder 50 geführt werden. Es weist gute Wickeleigenschaften, eine hohe Festigkeit und eine gute Alterungs- bzw. Nutzungsbeständigkeit auf. Das Seil 34 kann aber auch aus Polyacryl, Kevlar, Draht oder dergleichen gebildet sein. Das Seil 34 ist in einem Bereich zwischen dem Drehgelenk 42b und einem den Schneidelementen 12, 14 abgewandten Ende des zweiten Griffelements 18 zumindest mittelbar mit dem zweiten Griffelement 18, verbunden. Es kann über das Antriebskraftübertragungselement 340 eine Unterstützungskraft zum Schließen der Schneidelemente 12, 14 auf diese ausüben. Das Seil 34 ist über das Kraftübertragungselement in Form des Hebels 80 mit dem zweiten Griffelement 18 verbunden. An dem ersten Griffelement 16 ist das Seil 34 variabel auf der Seilwinde 32 aufwickelbar. Dadurch dass das Seil 34 in der Öffnungsfeder 50 geführt ist, kann vorteilhaft verhindert werden, dass ein Bediener von dem Seil 34 beim Bedienen der Schneidvorrichtung 10 gestört wird. Zudem kann eine Beschädigung, einer Verschmutzung, eine Witterungsaussetzung, eine Verletzung des Seils 50 und/oder dergleichen insbesondere durch die Verwendung der Evolutfeder vermieden werden. Über einen Antrieb der Seilwinde 32 kann eine freie Länge des Seils 34 variiert werden, bzw. ein Abstand oder Öffnungswinkel σ der Griffelemente 16, 18 und/oder ein Öffnungswinkel der Schneidelemente 12, 14 variiert werden (Figur 2, 3).

Einen Antriebsstrang zum kraftunterstützenden Betrieb der Handwerkzeugmaschine ist vorteilhaft aus den folgenden Elementen gebildet: Antriebsmotor 20, Getriebeeinheit 38, Kupplungseinheit 22, Rückstelleinheit 31 und Seilwinde 32. Diese Elemente sind seriell, insbesondere in der vorgenannten Reihenfolge angeordnet. Sie sind bevorzugt im ersten Griffelement 16 angeordnet. Im Bedarfsfall treibt der Antriebsmotor 20 die Getriebeeinheit 38 an, welche über die Kupplungseinheit 22 die Seilwinde 32 antreibt. Die Rückstelleinheit 31 hält das Seil 34 permanent unter Spannung und kann in Verbindung mit den Elementen der Kupplungseinheit 22 dazu vorgesehen sein bei einem Wechsel vom kraftunterstützten in den nicht kraftunterstützten Betrieb die Kupplungseinheit 22 auszukoppeln. Der Antriebsstrang ist vorteilhaft im Griffgehäuse 44 lediglich über das Gehäuse der Motoreinheit 20, das Gehäuse 74 der Getriebeeinheit 38, das Gehäuse 23 der Kupplungseinheit 22, sowie das den Schneidelementen 12, 14 zugewandte Drehlager 77 der Seilwinde 32 gelagert bzw. fixiert. Die Kupplungseinheit 22 und die Rückstelleinheit 31 sind sehr kompakt ausgeführt und ermöglichen eine einfache Montage. Das erste Griffelement 16 kann zumindest dadurch kompakt bzw. kurz ausgebildet sein. Eine Erstreckung des ersten bzw. zweiten Griffelements 16, 18 beträgt zwischen einem dem Drehgelenk 42 abgewandten Ende des ersten bzw. zweiten Griffelements 16, 18 und der Öffnungsfeder 50 weniger als 150 mm, insbesondere 120 bis 130 mm. Eine Erstreckung des ersten bzw. zweiten Griffelements 16, 18 von dem Drehgelenk 42 abgewandten Ende bis zum Drehgelenk 42, beträgt vorteilhaft weniger als 200 mm, insbesondere 170 bis 190 mm. Die Gesamterstreckung der Schneidvorrichtung 10 beträgt vorteilhaft weniger als 300 mm, insbesondere 200 bis 300 mm, bevorzugt 250 bis 260 mm. Ein Hüllkreisdurchmesser um das erste Griffelement 16 im Griffbereich 62 beträgt vorteilhaft weniger als 40 mm, insbesondere 30 bis 35 mm. Ein Hüllkreisdurchmesser um das zweite Griffelement 18 im Griffbereich beträgt vorteilhaft weniger als 30 mm insbesondere rund 25 mm. Vorteilhaft wird mit der Schneidvorrichtung 10 die Haptik und/oder Ergonomie analog einer nicht motorisierten rein manuellen Schneidvorrichtung erzielt. Zudem wird die Anordnung des Antriebsstrangs und die Anordnung der Energiespeichereinheit 54 zumindest in einem der Griffelemente 16, 18 ermöglicht.

Außerdem weist zumindest eines der Griffelemente 16, 18 zumindest an den Übergängen der Griffinnenseite 600 zu den Seitenflächen 610 des zumindest einen Griffelements 16, 18, einen zumindest teilweise elastisch und/oder abgeschrägt und/oder abgerundet ausgebildeten Bereich 620 auf (Figur 1). Der Bereich kann gegenüber der Seitenfläche 610 zurückgesetzt in Richtung einer Teilungsebene der Gehäuseschalen des zumindest einen Griffelements 16, 18 ausgebildet sein. Unter den Griffinnenseiten 600 sind insbesondere die sich zugewandten Griffinnenflächen gemeint. Ein Öffnungswinkel β der abgeschrägten Bereiche 620 beider Griffelemente 16, 18 zueinander beträgt vorteilhaft zwischen 30° und 150°, bzw. der Winkel zwischen einer gedachten Trennebenen zwischen den Griffelementen 16, 18 und einem abgeschrägten Bereich 620 des ersten oder zweiten Griffelements 16, 18 die Hälfte davon. Insbesondere variiert der Öffnungswinkel β zwischen dem Drehgelenk 42 und den dem Drehgelenk 42 abgewandten Enden der Griffelemente 16, 18 zumindest zwischen 60° bis 120°. Eine Schenkellänge s der abgeschrägten Fläche beträgt vorteilhaft 5 bis 10 mm und kann ebenfalls in ihrer Länge variieren. Im Bereich der dem Drehgelenk 42 abgewandten Enden der Griffelemente 16, 18 ist an den Griffinnenflächen ein Beabstandungselement 630, insbesondere ein Softanschlagelement vorgesehen. Die Außenseite 64 der Griffelemente 16, 18 ist vorteilhaft ebenfalls abgerundet, insbesondere entsprechend dem o.g. Hüllkreisdurchmesser des jeweiligen Griffelements 16, 18 abgerundet. Die Außenseite 64 weist vorteilhaft eine Softgripfläche auf um den Bedienkomfort zu erhöhen und/oder eine Strukturierung um ein Abrutschen beim Bedienen zu vermeiden. Die Griffelemente 16, 18 sind dazu vorgesehen sich zumindest beinahe zu berühren. Vorteilhaft kann durch die elastische bzw. abgerundete Ausbildung der Griffinnenseiten ein unerwünschtes Einquetschen, insbesondere ein Einquetschen einer Haut einer Hand eines Bedieners, vermieden werden. Dies steigert die Bediensicherheit der Schneidvorrichtung 10. Ein Hüllkreisdurchmesser um die geschlossene Schneidvorrichtung 10 beträgt vorteilhaft weniger als 100 mm, insbesondere beträgt ein Hüllkreisdurchmesser um den Griffbereich 62 der geschlossenen Griffelemente 16, 18 weniger als 70 mm, bevorzugt 50 bis 60 mm.

Ferner weist die Schneidvorrichtung 10 eine Steuereinheit 52 auf. Die Steuereinheit 52 ist in dem ersten Griffelement 16 angeordnet. Die Steuereinheit 52 ist in dem Griffgehäuse 44 des Griffelements 16 angeordnet. Die Steuereinheit 52 ist zu einer Ansteuerung der Antriebseinheit 20 vorgesehen. Grundsätzlich kann sowohl eine reine Steuerung der Antriebseinheit 20, als auch eine Regelung der Antriebseinheit 20 erfolgen. Die Steuereinheit 52 versorgt hierzu die Antriebseinheit 20 mit Energie. Prinzipiell kann die die Antriebseinheit 20 aber auch direkt über den Schalter 72 mit der Energiespeichereinheit 54 verbunden sein. Die Steuereinheit 52 ist zwischen der Antriebseinheit 20 und dem Drehgelenk 42 angeordnet. Die Steuereinheit 52 ist zwischen der Seilwinde 32 und dem Drehgelenk 42 angeordnet. Die Steuereinheit 52 ist vorteilhaft mit einem Anzeigeelement 200 verbunden. Das Anzeigeelement 200 indiziert eine Aktivierung bzw. einen Betrieb der Antriebseinheit 20, kann aber auch eine andere Form der Zustandsanzeige ermöglichen. Das Anzeigeelement 200 ist ein Licht. Das Licht ist eine LED. Das Anzeigeelement 200 kann einem Bediener beispielsweise über die Lichtfarbe Hinweise über den Ladezustand einer Energiespeichereinheit 54, die Unterstützungskraft während eines Unterstützungsbetriebs oder dergleichen anzeigen und/oder anzeigen ob ein Unterstützungsbetrieb aktiv ist oder nicht. Die Steuereinheit 52 ist mit der Energiespeichereinheit 54 verbunden. Über die Energiespeichereinheit 54 kann die Antriebseinheit 20 von der Steuereinheit 52 mit Energie versorgt werden. Die Energiespeichereinheit 54 weist zumindest eine Akkuzelle auf. Die Akkuzelle 58 ist aus Lithium-Ionen-Zellen gebildet. Grundsätzlich wäre jedoch auch eine andere, Ausbildung der zumindest einen Akkuzelle 58, denkbar. Die Akkuzelle 58 ist in dem zweiten Griffelement 18 angeordnet. Die Akkuzelle 58 ist in einem Griffgehäuse 60 des zweiten Griffelements 18 angeordnet. Die Akkuzelle 58 ist mit der Steuereinheit 52 verbunden (Figur 2, 3).

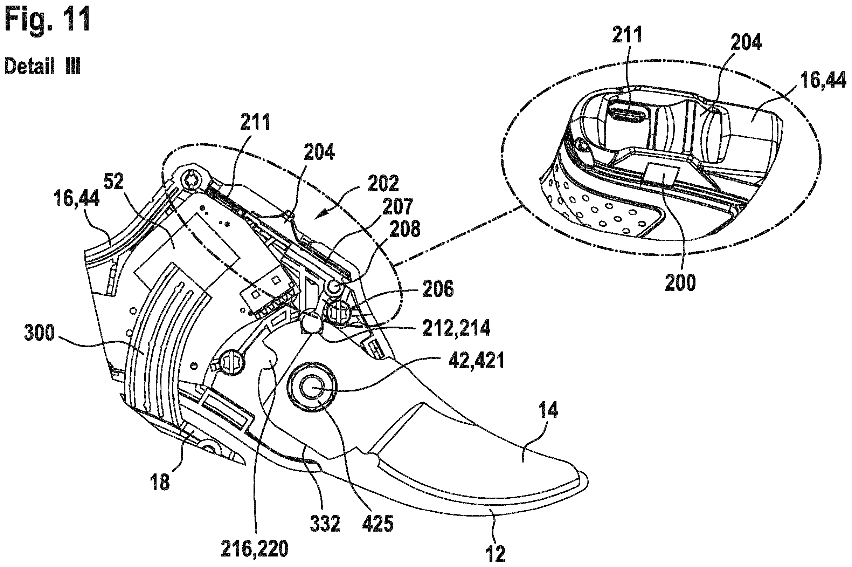

Ferner weist die batteriebetriebenen Handwerkzeugmaschine bzw. Schneidvorrichtung 10 eine Blockiervorrichtung 202 auf. Die Blockiervorrichtung 202 ist an dem ersten Griffelement 16 angeordnet. Die Blockiervorrichtung 202 ist in dem Griffgehäuse 44 des Griffelements 16 angeordnet. Figur 11 zeigt einen Ausschnitt der Schneidvorrichtung 10 bzw. die Blockiervorrichtung 202 in einem ersten Zustand. Die Schneidelemente 12, 14 der Schneidvorrichtung 10 befinden sich in einem geschlossenen Zustand. Die Blockiervorrichtung 202 befindet sich in einer ersten Position. Die Blockiervorrichtung 202 blockiert eine Betätigung und/oder Werkzeugbewegung der Schneidvorrichtung 10 zueinander, insbesondere der Schneidelemente 12, 14 bzw. Griffelemente 16, 18. Die Blockiervorrichtung 202 ist als mechanische Blockiervorrichtung 202 ausgebildet. Die Blockiervorrichtung 202 weist einen Schiebeschalter 204 auf. Der Schiebeschalter 204 ist dazu vorgesehen eine Ladeschnittstelle 211 zu blockieren und/oder zu verschließen oder aber freizugeben. Der Schiebeschalter 204 ist dazu vorgesehen von einem Bediener, insbesondere von einem Finger eines Bedieners, verschoben zu werden. Die Blockiervorrichtung 202 weist ein Rastelement 206 auf. Das Rastelement 206 ist dazu vorgesehen eine Relativbewegung der zwei Schneidelemente 12, 14 zueinander mechanisch zu blockieren oder freizugeben. Der Schiebeschalter 204 ist mit dem Rastelement 206 mechanisch verbunden. Der Schiebeschalter 204 ist über ein Drehgelenk 208 mit dem Rastelement 206 verbunden. Die Blockiervorrichtung 202 ist im Bereich der Steuereinheit 52 angeordnet. Die Blockiervorrichtung 202 ist im Bereich einer Verdickung des Griffelements 16 angeordnet. Die Blockiervorrichtung 202 bzw. der Schiebeschalter 204 der Blockiervorrichtung ist vorteilhaft bei einer einhändigen Bedienung der Schneidvorrichtung 10 zumindest mit einem Daumen des Bedieners betätigbar. Der Schiebeschalter 204 ist über Nuten 207 im Griffelement 16 längsverschieblich geführt bzw. gelagert. Der Schiebeschalter 204 kann relativ zum Griffelement 16 verschoben werden. Der Schiebeschalter 204 ist dazu ausgebildet eine Öffnung 209 des Griffgehäuses 44 zu verschließen oder zumindest teilweise freizugeben. Der Schiebeschalter 204 ist dazu vorgesehen die Ladeschnittstelle 211 abzudecken bzw. zu verschließen oder freizugeben. Der Schiebeschalter 204 ist dazu vorgesehen in der ersten Position die Ladeschnittstelle 211 freizugeben und in einer zweiten Position die Ladeschnittstelle 211 zu verschließen.
Das Rastelement 206 ist an einem freien Ende mit den Drehgelenk 208 verbunden. Das Rastelement 206 weist am anderen freien Ende ein Arretierelement 210 auf. Das Rastelement 206 ist dazu ausgebildet mittels des Arretierelements 210 in eine erste und eine zweite Ausnehmung 212, 214 des ersten bzw. zweiten Schneidelements 12, 14 einzugreifen, sofern die Schneidelemente 12, 14 in einem geschlossenen Zustand sind. Im geschlossenen Zustand fluchten die erste und zweite Ausnehmung 212, 214 der Schneidelemente 12, 14 in Richtung der Drehachse 149 des Drehgelenks 42. Das Rastelement 206 bzw. Arretierelement 210 ist in dieser Position dazu vorgesehen in die fluchtende Ausnehmung 212, 214 einzugreifen.

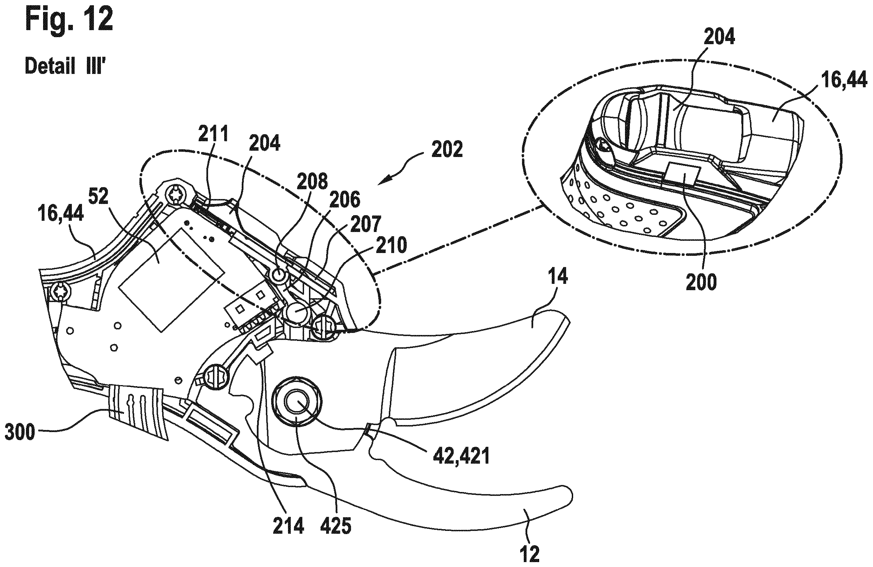

Figur 12 zeigt die Blockiervorrichtung 202 in einem zweiten Zustand. Die Blockiervorrichtung 202 befindet sich in der zweiten Position. Die Schneidelemente 12, 14 der Schneidvorrichtung 10 befinden sich in einer geöffneten Position. Im zweiten Zustand sind die Schneidelemente 12, 14 relativ zueinander bewegbar. Die Schneidvorrichtung 10 befindet sich in einem zumindest zum Handbetrieb vorgesehenen Zustand. In der zweiten Position der Blockiervorrichtung 202 gibt die Blockiervorrichtung 202 eine Betätigung und/oder Werkzeugbewegung der Schneidvorrichtung 10, insbesondere der Schneidelemente 12, 14 bzw. Griffelemente 16, 18 zueinander, frei. Die Ladeschnittstelle 211 ist vom Schiebeschalter 204 der Blockiervorrichtung 202 blockiert bzw. verschlossen. Das Rastelement 206 ragt nicht in die Ausnehmungen 212, 214 der Schneidelemente 12, 14. Zumindest eine der Ausnehmungen 212, 214 kann auch in zumindest einer mit einem der Schneidelemente 12, 14 rotationsfest verbundenen Struktur angeordnet sein. Beispielsweise kann die Ausnehmung 214 auch im Hebel 80 angeordnet sein. Sowohl an dem Schiebeschalter 204 als auch an dem Griffelement 18 kann ein Dichtungselement (nicht dargestellt) angeordnet sein, welches eine Abdichtung der Ladeschnittstelle 211 ermöglichen. Das Dichtungselement ist insbesondere zwischen dem Griffelemente 18 und dem Schiebeschalter 204 angeordnet. Das zumindest ein Dichtungselement stellt vorteilhaft eine Abdichtung der Ladeschnittstelle 211 in der zweiten Position der Blockiervorrichtung sicher. Vorteilhaft kann somit auch die Steuereinheit 52 oder andere elektronische Komponenten der Schneidvorrichtung 10, welche zumindest in elektronischem Kontakt mit der Ladeschnittstelle 211 stehen, vor Staub und Nässe, insbesondere im Betrieb der Schneidvorrichtung geschützt werden.

Die Schneidvorrichtung 10 weist ferner das Kraftübertragungselement in Form des Hebels 80 auf. Der Hebel 80 verbindet das zweite Schneidelement 14 mit dem zweiten Griffelement 18. Der Hebel 80 weist zumindest ein Formschlusselement zur Verbindung mit dem Schneidelement 14. Das zweite Griffelement 18 ist über zumindest ein weiteres Drehgelenk 65 mit dem Hebel 80 verbunden. Das Griffelement 18 und der Hebel 80 sind zumindest begrenzt relativ zueinander schwenkbar ausgebildet. Das Griffelement 18 und der Hebel 80 schwenken um das weitere Drehgelenk 65. Das Griffelement 18 und der Hebel 80 sind relativ zueinander um die Schwenkachse 66 schwenkbar ausgebildet. Die Schwenkbewegung ist zumindest über die Innenkontur des hohlen Griffelements 18 begrenzt. Ferner kann die Schwenkbewegung durch im Griffelement 18 ausgebildete Formschlusselement begrenzt sein. Das Griffelement 18 ist ferner mittels einer Feder 68 gegen den Hebel 80 abgestützt. Das Griffelement 18 ist an einem freien Ende des Hebels 80 mittels der Feder 68 gegen den Hebel 80 abgestützt.

Die Schneidvorrichtung 10 weist ferner einen Sensor 401 auf. Der Sensor 401 ist dazu ausgebildet einen Betriebszustand in dem ein Kraftunterstützungsbetrieb erforderlich ist zu sensieren. Vorteilhaft kann der Sensor 401 oder weitere Sensoren (hier nicht dargestellt) einen Betriebszustand sensieren, bei dem zum Zwecke der Betriebssicherheit der Schneidvorrichtung, insbesondere bei Anordnung eines Objekts 17 zwischen den Griffelementen 16, 18, ein Unterstützungsbetrieb auszusetzen und/oder abzuschalten ist. Vorzugsweise ist der Sensor 401 ein Kraftsensor 40 der dazu vorgesehen ist, eine auf das zweite Griffelement 18 wirkende Kraft zu sensieren, insbesondere relativ zu dem ersten Griffelement 16 und/oder relativ zu dem Hebel 80. Vorzugsweise kann der Kraftsensor 40 sowohl dazu vorgesehen sein, eine genaue Kraft als auch lediglich eine Überschreitung einer Grenzkraft zu erfassten. Der Kraftsensor 40 ist an dem zweiten Griffelement 18 und/oder an dem als Hebel 80 ausgebildeten Kraftübertragungselement angeordnet. Der Kraftsensor 40 ist vorteilhaft in dem zweiten Griffelement 18 integriert angeordnet. Der Kraftsensor 40 ist zwischen dem Hebel 80 und dem Griffelement 18 angeordnet. Der Kraftsensor 40 weist zumindest eine Feder 68 und einen Schalter 72 auf, insbesondere einen Mikroschalter. Die Feder 68 stützt den Hebel 80 vorteilhaft gegenüber einer Außenseite 64 des zweiten Griffelements 18 ab. Sofern bei einem Schließen der Schneidvorrichtung 10, beispielsweise zum Schneiden eines Schnittguts 11, eine Schneidkraft F_{cut} auf die Schneidelemente 12, 14 wirkt, kann das zweite Griffelement 18 relativ zum Kraftübertragungselement bzw. zum Hebel 80, gegen die Federkraft F_{gs} der Feder 68 bewegt werden, insbesondere verschwenkt werden. Dazu sind der Hebel 80 und das Griffelement 18 um das gemeinsame weitere Drehgelenk 65 schwenkbar angeordnet. Die Feder 68 koppelt sozusagen das Griffelemente 18 mit dem Hebel 80 in zumindest einem Betriebszustand. Der Hebel 80 weist eine Ausnehmung und das Griffelement 18 einen Fortsatz auf, der insbesondere beim Verbinden zweier Griffschalen des zweiten Griffelements 18, eine Drehachse 66 ausbildet, um welchen der Hebel 80 zumindest begrenzt drehen bzw. schwenken kann. Das Griffelement 18 ist gegenüber dem Hebel 80 vorteilhaft begrenzt um die Drehachse 66 schwenkbar. Die Schwenkbegrenzung stellen zumindest korrespondierende Formschlusselemente an dem zweiten Griffelement 18 und dem Hebel 80 sicher. Ferner kann auch die Feder 68 eine Schwenkbegrenzung darstellen, insbesondere die komprimierte Feder 68. Das zweite Griffelement 18 wird vorteilhaft an einem freien Ende des Hebels 80 mittels der Feder 68 gegen den Hebel 80 abgestützt. Auf den Hebel 80 ist vorteilhaft ein Aufnahmeelement 69 aufgesteckt. Das Aufnahmeelement 69 dient vorteilhaft als Aufnahme, insbesondere Führungsaufnahme der Feder 68 und vorteilhaft als Aufnahme für den Schalter 72, insbesondere als Steckaufnahme. Soweit die auf das Griffelement 18 ausgeübte Bedienkraft Fᵤₛₑᵣ zur Betätigung der Schneidelement 12, 14 eine Federkraft F_{gs} übersteigt, verschwenkt das Griffelement 18 relativ zum Hebel 80. Im vorliegenden Fall nährt sich die Außenseite 64 des Griffelements 18 dem Hebel 80 an.

Zur Erfassung dieser Schwenkbewegung oder Schwenkkraft oder zur Erfassung zumindest einer Schwellwertüberschreitung, einer Bewegung der Feder 68 und/oder dergleichen, weist der Kraftsensor 40 einen Schalter 72 auf. Der Schalter 72 ist als Mikroschalter ausgebildet, insbesondere als Öffner oder Wechsler. Der Schalter 72 weist ein als Druckelement ausgebildetes Auslöseelement auf. Das Druckelement ist als Schwenkelement 71, insbesondere als Schwenkhebel ausgeführt. Es ist zu einer Betätigung des Schalters 72 vorgesehen. Der Schalter 72 sensiert vorteilhaft ein Ausschwenken bzw. eine Distanzierung des Schalters 72 von der Innenseite 63 des zweiten Griffelements 18. Somit wird der Schalter 72 beim Ausschwenken des Schwenkelements 71 aktiviert. Oder anders ausgedrückt ist der Schalter 72, in einem Zustand in dem das Schwenkelement 71 an dem Schalter 72 anliegt, deaktiviert und in einem Zustand, in dem das Schwenkelement 71 gegenüber dem Schalter 72 ausgeschwenkt ist, aktiviert. Somit schließt der Schalter 72 bei einem definierten Ausschwenken des Schwenkelements 71. Das Schwenkelement 71 kann sich am Gehäuse des Griffelement 18 direkt abstützten oder an einem zusätzlichen Druckelement 81 oder dergleichen. Ferner kann das Druckelement 81 derart ausgebildet sein, dass es zur Auswahl einer Sensitivität des Kraftsensors 40 vorgesehen ist. Das Druckelement 81 ist vorteilhaft Teil des Kraftsensors 40, welches vorteilhaft an einem weiteren Schalter 73 angeordnet ist. Der weitere Schalter dient als Unterstützungsbetriebseinstellelement. Der weitere Schalter 73 ist vorteilhaft querverschieblich zum Schwenkelement 71 ausgebildet. Der weitere Schalter 73 lässt sich in Richtung des Drehgelenks 42 verschieben. Der weitere Schalter 73 ist auf der dem ersten Griffelement 16 zugewandten Seite, des zweiten Griffelements 18 angeordnet. Der weitere Schalter 73 ist somit auf der Innenseite 63 des zweiten Griffelements 18 angeordnet. Eine versehentliche Betätigung des weiteren Schalters 73, insbesondere während eines Schneidvorgangs, kann dadurch vermieden werden. Der weitere Schalter 73 ist als Schiebeschalter ausgebildet. Der weitere Schalter 73 weist ein Druckelement 81 auf welches keilförmig ausgebildet ist. Das Druckelement 81 ist dazu vorgesehen das Schwenkelement 71 in allen Betriebszuständen zu berühren. Durch ein verschieben des weiteren Schalters 73 gegenüber dem Schalter 72 bzw. dem Schwenkelement 81 kann die Sensitivität des Kraftsensors 40 bzw. ein Schwellwert zum Auslösen des Schalters 72 variiert werden. Durch die trigonometrische Abstandsbeziehung des Druckelements 81 zum Schwenkelement 71, insbesondere über die Hebellänge des Hebels 80 innerhalb des zweiten Griffelements 18, kann bei einer Verschiebung des weiteren Schalters 73 die Sensitivität des Kraftsensors 40 verändert werden. Bei einer verschieben des weiteren Schalters 73 in Richtung des ersten bzw. zweiten Schneidelements 12, 14 wird der Schalter 72 erst bei einer höheren Bedienkraft Fᵤₛₑᵣ aktiviert. Bei einer Verschiebung des weiteren Schalters 73 in die Gegenrichtung wird der Schalter 72 hingegen bei einer niedrigeren Bedienkraft Fᵤₛₑᵣ aktiviert. Somit lässt sich auf kostengünstige Weise mit mechanischen Mitteln die Sensitivität des Kraftsensors 40 einstellen. Es lassen sich unterschiedliche Aktivierungslevel bzw. Schwellwerte für den Unterstützungsbetrieb der Schneidvorrichtung 10 einstellen, beispielweise in Abhängigkeit einer variierenden Handkraft eines Bedieners. Der weitere Schalter 73 weist in Verbindung mit der Schalteraufnahme, insbesondere dem Griffelement 18, vorteilhaft drei Rastpositionen auf. Dadurch lassen sich vorteilhaft drei Unterstützungsbetriebslevel definieren.
Durch die Konstruktion kann auf einen zusätzlichen On/Off-Schalter zum Aktivieren eines alternativen, rein elektronischen Kraft- bzw. Wegsensors verzichtet werden, der eine permanente Bestromung benötigen würde, um eine definierte Schwellwertüberschreitung zu sensieren. Vorteilhaft wird deshalb der Schalter 72 und damit der Unterstützungsantrieb nur dann aktiviert, wenn eine mechanische Kraft der Feder 68 in Form eines Schwellwerts überschritten wird. Oder anders ausgedrückt ein Schwellwert in Abhängigkeit der federerschwerten Schwenkbewegung des Hebels 80 innerhalb des Griffelements 18 um das Drehgelenk 67 überschritten wird, so dass der Schalter 72 auslöst. Dadurch kann ein besonders kostengünstiger und konstruktiv einfacher Kraftsensor 40 bereitgestellt werden.

Ferner greift das mit der Antriebseinheit 20 in Wirkverbindung stehende Antriebskraftübertragungselement 340 in Form des Seils 34 am Hebel 80 an. Bei Aktivierung der Antriebseinheit 20 wird somit der Hebel mit der Antriebskraft Fₐₙ beaufschlagt und die Schließbewegung der Schneidelemente 12, 14 unterstützt. Somit entkoppelt der Hebel 80 die Antriebskraft Fₐₙ von einem direkten Kraftangriff am Griffelement 18. Wird beispielsweise während eines Kraftunterstützungsbetriebs der Schneidvorrichtung 10 ein Objekt 17 zwischen den Griffelementen 16, 18 angeordnet, können sich die Griffelemente 16, 18 nicht weiter aufeinander zu bewegen. Die Antriebskraft Fₐₙ bewegt den Hebel 80 innerhalb des Griffelements 18 in Richtung seiner Ausgangslage, der Schalter 72 wird geöffnet, der Kraftunterstützungsbetrieb beendet. Somit entkoppelt der Kraftsensor 40 bzw. der Hebel 80, die Feder 68 und der Schalter 72, einen Kraftunterstützungsbetrieb zum zusammendrücken der Griffelemente 16, 18. Sofern also ein Objekt 17 zwischen den Griffelementen 16, 18 angeordnet wird, wird zwangsläufig der Schalter 72 geöffnet und die Antriebseinheit 20 deaktiviert, so dass es zu keiner unerwünschten Quetschung beispielsweise einer Gliedmaße oder der Haut eines Bediener oder zu einer Beschädigung der Griffelemente 16, 18 beispielsweise bei Anordnung eines Asts zwischen diesen, kommen kann. In derartigen Fällen trägt lediglich die Bedienkraft Fᵤₛₑᵣ zu einer Quetschung des Objekts 17 bei. Durch die Anordnung des Hebels 80 im Griffelement 18 kann insbesondere eine Anordnung eines Objekts 17 im gesamten Bereich zwischen dem weiteren Drehgelenk 65 des Hebels und den dem Drehgelenk 42 abgewandten Enden der Griffelemente 16, 18 erkannt werden und der Unterstützungsbetrieb abgestellt werden. Es kann auf einen zusätzlichen Sensor (hier nicht dargestellt) zur Erkennung eines Objekts 17 zwischen den Griffelementen 16, 18 verzichtet werden. Somit wird vorteilhaft nur der Kraftsensor 40 benötigt, der bei einer Schwellwertüberschreitung auslöst um den Unterstützungsbetrieb zu aktivieren, und in dem Moment, in dem ein Objekt 17 zwischen den Griffelementen 16, 18 angeordnet wird, den Unterstützungsbetrieb zwangsläufig abschaltet. Dadurch ist die Fehleranfälligkeit und ein Verletzungsrisiko ebenso wie der Steueraufwand, um ggf. mehrere alternative Sensoren zur Erkennung der unterschiedlichen Betriebsfälle - Kraftunterstützungsbetrieb erforderlich, Objekt 17 zwischen den Griffelementen 16, 18 - ungleich geringer.

Grundsätzlich wäre dennoch eine alternative Ausbildung des Kraftsensors 40 denkbar. Beispielsweise durch einen Kraftsensor auf der Grifffläche des ersten oder zweiten Griffelements 16, 18 oder ein Wegesensor zur Erkennung der Relativbewegung zwischen dem zweiten Griffelement 18 und dem Hebel 80 oder andersartige Sensoren zur Erkennung einer auf die Griffelemente 16, 18 wirkenden Bedienkraft Fᵤₛₑᵣ und/oder zur Erkennung einer durch das Objekt 17 zwischen den Griffelementen 16, 18 verursachten Reaktionskraft, die der Schließbewegung der Griffelemente 16, 18 entgegenwirkt. Auch alternative Anordnungen der Feder 68, des Schalter 72 oder des weiteren Schalters 73 zur Realisierung der gleichen Funktionalität sind denkbar. Dadurch könnten ebenfalls aktuell anliegende Kräfte an den Griffelementen 16, 18, insbesondere der Bedarf des Kraftunterstützungsbetriebs und der Spezialfalls - ein Objekt 17 zwischen den Griffelementen 16, 18 und Aussetzten des Kraftunterstützungsbetriebs - erfasst werden. Ferner könnte eine Auslösekraft des bzw. der Kraftsensoren 40 frei durch eine Software definiert werden. Grundsätzlich wäre zudem denkbar, dass der Kraftsensor 40 zwischen verschiedenen Graden eines Eindrückens des Schalters 72 oder dem Schwenken des Schwenkelements 71 differenzieren kann, um so auf eine genaue aktuell anliegende Bedienkraft Fᵤₛₑᵣ rückschließen zu können.

Ferner ist der Kraftsensor 40 mit der Steuereinheit 52 verbunden. Die Steuereinheit 52 ist zu einer Steuerung der Antriebseinheit 20 abhängig von einem Signal des Kraftsensors 40 vorgesehen. Die Steuereinheit 52 ist dazu vorgesehen, die Antriebseinheit 20 bei Überschreibung eines definierten Messwerts des Kraftsensors 40 zu aktivieren. Die Steuereinheit 52 ist dazu vorgesehen, die Antriebseinheit 20 bei einem Schließen des Schalters 72 des Kraftsensors 40 zu aktivieren. Ferner ist die Steuereinheit 52 dazu vorgesehen, die Antriebseinheit 20 bei einem Öffnen des Schalters 72 des Kraftsensors 40 zu stoppen. Auch eine direkte Verbindung der Abtriebseinheit 20 mit der Energiespeichereinheit 54 über den Schalters 72 und ohne die Steuerung 52 ist denkbar.

Bei einem Betrieb der Schneidvorrichtung 10 kann zwischen einem manuellen Modus der Schneidvorrichtung 10, bei welchem eine komplette Schneidekraft F_{cut} von einem Bediener aufgebracht wird, und einem unterstützten Modus, bei welchem ein Teil der Schneidekraft F_{cut} zudem von der Antriebseinheit 20 aufgebracht wird, unterschieden werden.

Das zweite Schneidelement 14, ist als aktives Schneidelement 14 mit Schneidkante ausgebildet. Es ist als austauschbares Schneidelement 14 ausgebildet. Das zweite Schneidelement 14 ist über zumindest ein Formschlusselemente 216 (Figur 11, 12) mit dem Hebel 80 der Schneidvorrichtung 10 verbunden, der wiederum mit dem zweiten Griffelement 18 verbunden ist. Die Formschlusselemente 216 sind zumindest zur Übertragung von Kräften in Radialrichtung um die Drehachse 420 vorgesehen, können aber auch zur Übertragung von axialen Kräften Fₐₓ in Richtung der Drehachse 420, an dem Hebel 80 oder dem Schneidelement 14 ausgebildet sein. Am Hebel 80 ist eine Rastnase 220 ausgebildet, welche in das Formschlusselement 216 des Schneidelements 14 im verbundenen Zustand eingreift. Ferner ist zumindest eine axiale Führungsfläche 332 zur Einführung des Schneidelements 14 in die Schneidelementaufnahme 400 vorgesehen.

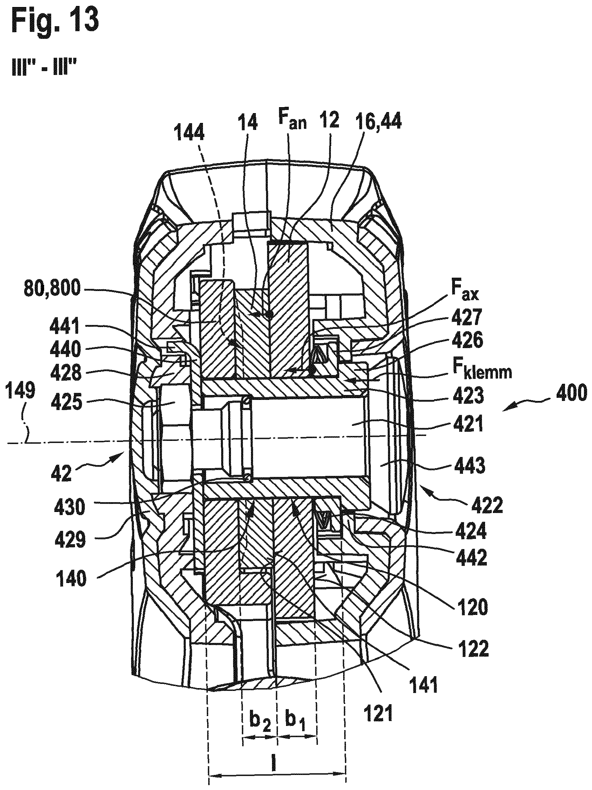

Figur 13 zeigt einen Schnitt III-III' durch die Schneidvorrichtung 10 bzw. die Schneidelementaufnahme 400. Das erste und das zweite Schneidelement 12, 14 sind mittelbar über eine entlang der Drehachse 420 angeordnete Welle verbunden. Die Welle bildet ein Drehgelenk 42 für die Schneidelemente 12, 14. Die Welle ist zumindest durch ein Verbindungselement 421 gebildet. Auf dem Verbindungselement 421 ist ferner ein Abstandshalteelement 423 angeordnet. Das Abstandhalteelemente 423 dient zumindest der axialen, im vorliegenden Fall auch der radialen Beabstandung des Verbindungselements 421 zu den Schneidelementen 12, 14. Das Abstandshalteelement 423 kann über ein Sicherungselement 430 am Verbindungselement 421 fixiert sein. Das Verbindungselement 421 kann auch einstückig mit dem Abstandshalteelement 423 ausgebildet sein. Das Verbindungselement 421 ist als Schraube ausgebildet. Die Schraube kann gelöst und vorteilhaft samt Abstandshalteelement 423 aus der Schneidvorrichtung 10 bzw. dem Griffgehäuse 44 entnommen werden. Das Abstandshalteelement 423 ist Teil einer Kontrollvorrichtung 422, welche unabhängig von einer Klemmkraft Fₖₗₑₘₘ des Verbindungselements 421 einen definierten Anpressdruck Fₐₙₚᵣ der Schneidelemente 12, 14 zueinander in Richtung der Drehachse 420 bewirkt. Die Schneidelemente 12, 14 weisen Durchgangsbohrungen 120, 140 in Drehachsrichtung 420 auf, durch welche das Verbindungelement 421 hindurch ragt. Die radialen Flächen der Durchgangsbohrungen 120, 140 bilden Lagerflächen, welche auf einer korrespondierenden Lagerfläche des Abstandshalteelement 423 bzw. einer das Verbindungselement 421 radial ummantelnden Hülse, angeordnet sind.

Das Abstandshalteelement 423 legt zumindest mittelbar einen Mindestabstand, zweier Klemmkraftübertragungselemente in Richtung der Drehachse 420 fest, hier in Form des Schraubenkopfes 443 der Schraube und in Form eines Widerlagers 425, wobei das Widerlager als Schraubenmutter, insbesondere als verdrehsicher aufgenommene Schraubenmutter ausgebildet ist, mit welcher die Schraube verbunden ist. Diese Klemmkraftübertragungselemente übertragen eine Vorspannkraft Fₖₗₑₘₘ des Verbindungselements 421 zumindest mittelbar auf das Abstandshalteelement 423. Durch das Abstandshalteelement 423 wird lediglich ein definierbarer Teil der Klemmkraft Fₖₗₑₘₘ auf die Axialflächen 121, 141 der Schneidelemente 12, 14 übertragen. Somit kann zumindest eine axiale Position der beiden Schneidelemente 12, 14 entlang der Drehachse bzw. eine Reibkraft zwischen den Schneidelemente 12, 14, welche beim Verschwenken dieser zueinander auftritt, unabhängig von einem Anzugsmoments des Verbindungselements 423 bzw. unabhängig von einer weiteren Einflussgröße, festgelegt werden.

Eine Längenausdehnung I des Abstandshalteelements 423 in Richtung der Drehachse 420 erlaubt eine Relativbewegung der Schneidelemente 12, 14 insbesondere eine Schwenkbewegung der Schneidelemente 12, 14 zueinander. Sie entspricht vorteilhaft zumindest der Summe der Breitenmaße b₁, b₂ der beiden Schneidelemente 12, 14 entlang der Drehachse 420. Dadurch kann unabhängig von der Klemmkraft Fₖₗₑₘₘ des Verbindungselements 421 bzw. des Anzugsmoments der Schraube ein Abstand bzw. ein maximaler Anpressdruck Fₐₙ, zumindest im nichtbetätigten Zustand der Schneidvorrichtung 10, zwischen den Schneidelementen 12, 14 festgelegt werde, so das eine Betätigbarkeit der Schneidvorrichtung 10 garantiert ist.

Ferner kann die Kontrollvorrichtung ein elastisches Element 424 aufweisen, dass die Schneidelemente 12, 14 zueinander mit einer definierten Axialkraft bzw. Klemmkraft Fₖₗₑₘₘ entlang der Drehachse 420 beaufschlagt. Das elastische Element 424 ist als Feder, insbesondere als Druckfeder, besonders bevorzugt als Wellfeder ausgebildet. Das elastische Element 424 ist mittelbar zwischen einer Axialfläche 122 des ersten Schneidelements 12 und einer radialen Schulter 426 des Abstandshalteelements 423 angeordnet. Das elastische Element ist zwischen der Axialfläche 122 des ersten Schneidelements 12 und einem Sicherungsring 427 angeordnet. Der Sicherungsring 427 stützt sich an der Schulter 426 des Abstandshalteelements 423 ab. Ferner stützt sich der Sicherungsring 427 auch am Griffgehäuse 44 ab. Die Kraft mit der das elastische Element 424 komprimiert wird, entspricht der Axialkraft Fₐₓ und wirkt als Anpresskraft Fₐₙ bzw. als Anpressdruck oder Normalkraft zwischen den zwei Schneidelementen 12, 14. Somit stellt das elastische Element 424 eine Reibkraft zwischen den Schneidelementen 12, 14 ein. Dadurch kann zumindest teilweise eine Grundbetätigungskraft zum Schließen der Schneidvorrichtung 10 festgelegt werden. Dadurch kann ein Grundabstand zwischen den Schneidelementen 12, 14 eingestellt werden. Unabhängig von der Fertigungsbreite - innerhalb eines Toleranzbandes - der Schneidelemente 12, 14 bleibt der Anpressdruck Fₐₙ der Schneidelemente 12, 14 zueinander, aufgrund der Federkonstante des elastischen Elements 424 nahezu konstant. Auch weitere Toleranzen der Schneidelementaufnahme 400 können ausgeglichen werden. Vorteilhaft kann somit ein Blatt Papier ebenso wie ein Ast von der Schneidvorrichtung 10 geschnitten werden, da sich der Schnittspalt an die durch das Schnittgut 11 gegebene Anforderung anpassen kann. Ein Austausch des zweiten Schneidelements 14 ist ohne Nachjustieren der Klemmkraft bzw. eines Anzugsmoments der Schraube oder eine Variation von Zwischenelementen möglich. Unabhängig von der Klemmkraft bzw. dem Anzugsmoment des Verbindungselements 423 bzw. der Schraube bleibt der Anpressdruck Fₐₙ zwischen den Schneidelementen 12, 14 nahezu konstant. Die Wellfeder weist vorteilhaft ein Außendurchmesser im Bereich von 20 mm und einen Innendurchmesser im Bereich von 15 mm auf. Eine freie axiale Länge der Wellfeder beträgt vorteilhaft weniger als 5 mm, insbesondere 3,25 mm. Die Klemmkraft der Wellfeder beträgt vorteilhaft 15 bis 25 N, bei einer komprimierten Länge von 1,1 bis 1,5 mm.

Ferner stützt sich bei einem Lösen des Verbindungselements 423 und insbesondere gänzlichen Entnahme des Verbindungs- und Abstandshalteelements 421, 423 der Sicherungsring 427 am Griffgehäuse 44 axial ab. Somit bleibt zumindest eine reduzierte Axialkraft Fₐₓ der Feder bzw. ein Anpressdruck Fₐₙ zumindest auf das erste Schneidelement 12 erhalten. Dadurch kann das auszutauschende zweite Schneidelement 14 auch ohne Verbindungselement 421 zumindest positioniert werden und/oder ist gegen ein unbeabsichtigtes Herausfallen aus der Schneidvorrichtung 10 gesichert.

Zumindest zur Übertragung der Axialkraft Fₐₓ des elastischen Elements 424 ist auch das erste insbesondere feststehende Schneidelement 12 querverschieblich, also in Richtung der Drehachse 420 verschieblich, ausgebildet. Es wird in Rotationsrichtung um die Drehachse durch Formschlusselemente gesichert. Diese stützten sich an korrespondierenden Formschlusselementen im ersten Griffelement 16 ab. Insbesondere sind die korrespondierenden Formschlusselemente Verbindungselemente zum Verbinden der Griffschalen des ersten Griffelements 16.

Das elastische Element 424 dient auch als Überlastschutzelement der Schneidvorrichtung 10. Es beugt einer plastische Verformung der Schneidelemente 12, 14 im Betrieb der Schneidvorrichtung 10 vor. Durch das elastische Element 424 wird ein Schwellwert Fₐₓ eingestellt, ab dem das Schneidelement 10 klaffen darf. Bei Überschreiten der Federkraft Fₐₓ gibt das elastische Element zumindest bis zum axialen Anschlag des zweiten Schneidelements 14 an einem Anschlagelement 442 nach und ermöglicht so eine zumindest geringe axiale Verschiebung und/oder ein Kippen innerhalb des ersten Griffelements 16 bzw. entlang der Drehachse 420. Das elastische Verhalten und das erwünschte Klaffen bei Überschreitung eines definierten Schwellwerts kann über die Federkraft des elastischen Elements 424 und die Anordnung der Kontrollvorrichtung 422 eingestellt werden. Im Vorliegenden Fall umfasst die Kontrollvorrichtung 422 zumindest das Verbindungselement 421, das Abstandshalteelement 423, den Sicherungsring 427 und das elastische Element 424.

Das Widerlager 425 des Verbindungselements 421 in Form der Schraubenmutter ist fest im Griffgehäuse 44 der Schneidvorrichtung 10 aufgenommen. Über ein hexagonales Formschlusselement 428 ist es verdrehsicher aufgenommen. Ein Deckel 429 der mit dem Griffgehäuse 44 verbunden ist, sichert die Schraubenmutter axial, so dass diese selbst bei entnommenem Verbindungselement 421 an der Schneidvorrichtung 10 positioniert ist. Zwischen Griffgehäuse 44 und Hebel 80 ist ferner ein Gleitelement 440 in Form eines Gleitrings bzw. einer Gleitscheibe angeordnet. Die Gleitscheibe ist zumindest ein Fixierelement 441 drehfest mit dem Griffgehäuse 44 verbunden. Ferner ist das Gleitelement 440 auch zwischen Abstandshalteelement 423 und dem als Schraubenmutter ausgebildeten Widerlager 425 angeordnet. Somit ist das Widerlager axial zwischen Gleitelement 440 und dem Deckel 429 insbesondere bei Entnahme des Verbindungselements 421 gesichert. Ferner entkoppelt das Gleitelement 440 eine potentielle Drehbewegung des Abstandshalteelements 423 von dem Widerlager 425.

Die Kontrollvorrichtung 422 kann an ein oder mehreren Stellen zumindest mittelbar mit dem Griffgehäuse 44 und/oder dem stehenden ersten Schneidelement 12 verdrehgesichert sein, so dass die Relativbewegung des Hebels 80 bzw. ersten Schneidelements 12 nicht zu einem ungewollten Lösen des Verbindungselements 421 führt. Dazu sind beispielsweise das Gleitelement, die Widerlager 425 und/oder das Abstandshalteelement 423 verdrehgesichert am Griffgehäuse 44 aufgenommen.

Eine Dicke des ersten Schneidelements 12 beträgt vorteilhaft 4 mm. Eine Dicke des zweiten Schneidelements 14 beträgt an seiner dicksten Stelle vorteilhaft 3,5 mm. Eine Dicke des Hebels 80 beträgt vorteilhaft 3,5 mm.

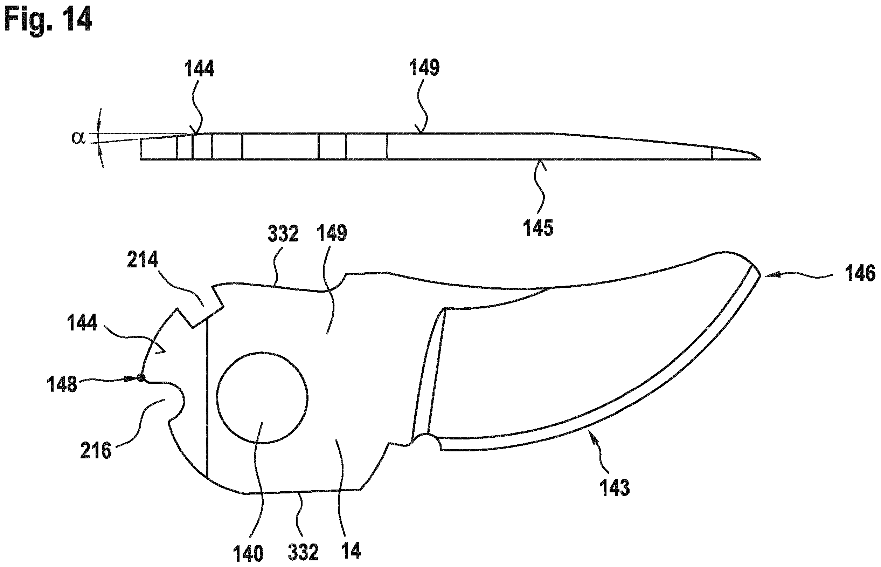

Figur 14 zeigt ein Schneidelement, das als das zweite Schneidelement 14 ausgebildet ist in einer Draufsicht, sowie einer Seitenansicht. Das zweite Schneidelement 14 weist eine Klinge 143 auf. Das zweite Schneidelement 14 ist ein austauschbares Schneidelement für die Schneidvorrichtung 10. Das zweite Schneidelement 14 weist eine Spitze 146 und ein der Spitze 146 gegenüberliegendes Ende 148 auf. Im Bereich des Endes 148 weist das zweite Schneidelement 14 eine Ausnehmungen 214 auf. Die Ausnehmung 214 dient als Aufnahme für ein Arretierelement 210 der Blockiervorrichtung 202 der Schneidvorrichtung 10 zum Blockieren einer Bewegung der Schneidelemente 12, 14 zueinander. Ferner weist das zweite Schneidelement 14 das Formschlusselement 216 auf, das als Gegenrastausnehmung für die Rastnase 220 des Hebels 80 der Schneidvorrichtung 10 ausgebildet ist. Das Formschlusselement 216 dient der Übertragung radialer Kräfte des Griffelements 18, insbesondere über den Hebel 80, um das Drehgelenk 42 der Schneidvorrichtung 10. Das Ende 148 des zweiten Schneidelements 14 ist ferner zumindest teilweise abgerundet. Zwischen dem Ende 148 des zweiten Schneidelements 14 und einer Aufnahme 142 die als Ausnehmung 140 ausgebildet ist, welche zur drehbaren Aufnahme des zweiten Schneidelements 14 in der Schneidvorrichtung 10 vorgesehen ist, weist das zweite Schneidelement 14 eine Einführhilfe 144 in Form einer Schrägfläche auf. Die Einführhilfe 144 ist gegenüber einer durch die Schnittfläche 145 gebildeten Schnittflächenebene des zweiten Schneidelements 14 abgeschrägt, kann aber auch rund, insbesondere ballig ausgebildet sein. Die Einführhilfe 144 verläuft im Wesentlichen vom Zentrum der Aufnahme 142 in radialer Richtung bis zum Ende 148 des zweiten Schneidelements 14. Eine Dicke des zweiten Schneidelements 14 nimmt im Bereich der Einführhilfe 144 in Richtung des Endes 148 ab. Die Dicke nimmt von rund 3,5 mm auf 2,7 mm ab. Eine Schenkellänge der Schrägfläche beträgt vorteilhaft 9 mm. Der Winkel α der Schrägfläche beträgt vorteilhaft weniger als 30°, insbesondere weniger als 15° und ganz besonders bevorzugt rund 5°. Zwischen der Einführhilfe 144 und der Klinge 143 erstreckt sich eine Auflagefläche 149. Die Auflagefläche 149 ist zur formschlüssigen Verbindung mit dem Hebel 80 vorgesehen. Sie ist eben ausgebildet und Normal zur Richtung der Ausnehmung 142 bzw. Normal zur Richtung einer Drehachse 420 der Gartenschere 10 orientiert. Die gegenüberliegende Schnittfläche 145 ist zum Gleiten entlang des ersten Schneidelements 12 ausgebildet. Es schwenkt gleitend entlang des ersten Schneidelements 12 um die Drehachse 420 bzw. das Drehgelenk 42.

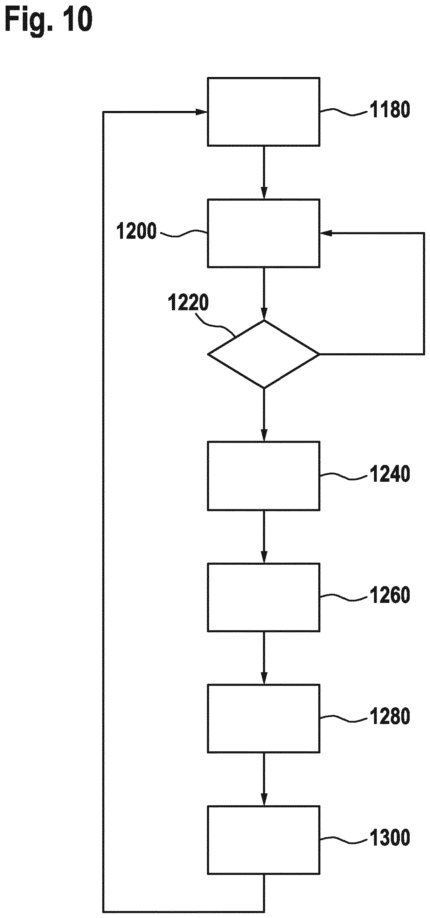

Nachfolgend wird ein Verfahren zu einem Betrieb der Schneidvorrichtung 10 beschrieben (Figur 10).

Bevorzugt ist eine Betätigung der Schneidvorrichtung nur dann möglich, wenn die Blockiervorrichtung in der zweiten Position ist. Bevorzugt ist ein Ladevorgang der Schneidvorrichtung in dieser zweiten Position nicht vorgesehen.
Die Schneidvorrichtung 10 befindet sich ständig in einem Betriebsmodus. Sobald der Schalter 72 geschlossen wird aktiviert die Steuereinheit 52 den Antriebsmotor 20. Grundsätzlich wäre jedoch auch denkbar, dass die Schneidvorrichtung 10 insbesondere zusätzliche einen Betriebsschalter aufweist, mittels dem die Schneidvorrichtung 10 aktiviert und deaktiviert werden kann. Alternativ wäre auch denkbar, dass die Schneidvorrichtung 10 beispielsweise durch eine definierte Schließ- und/oder Öffnungsabfolge der Schneidvorrichtung 10 selbst aktiviert werden kann. Eine Deaktivierung wäre beispielsweise zeitabhängig denkbar.

Möchte ein Bediener während eines Betriebs einen Schneidevorgang durchführen, wie beispielsweise das Durchtrennen eines Asts, muss er das zu schneidende Schnittgut 11 zwischen den Schneidelementen 12, 14 der Schneidvorrichtung 10 positionieren. Anschließend können die Schneidelemente 12, 14, insbesondere wie bei einer herkömmlichen Gartenschere, durch Zusammendrücken der Griffelemente 16, 18 relativ zueinander, geschlossen werden. Die Griffelemente 16, 18 werden in einem Schritt 1180 von einem Bediener manuell zusammengedrückt. Sofern die Federkraft des Kraftsensors 40 nicht überschritten wird, gibt der Schalter 72 kein Signal aus. Im Schritt 1200 überwacht die Steuereinheit 52 ein Signal des Kraftsensors 40 bzw. Schalters 72. Die Steuereinheit 52 überwacht somit eine für einen Schneidevorgang benötigte Kraft. Die Steuereinheit 52 überprüft, ob der Schalter 72 des Kraftsensors 40 geöffnet oder geschlossen ist.

Ist eine für den Schneidevorgang benötigte Kraft eines Bedieners Fᵤₛₑᵣ geringer, als eine von dem Kraftsensor 40 definierte Kraft, welche zu einem Schließen des Schalters 72 benötigt wird, wird die Schneidvorrichtung 10 in einem manuellen Modus verwendet. Ist der Schalter 72 geöffnet, wird in der folgenden Verzweigung 1220 der Schritt 1200 wiederholt. In dem manuellen Modus werden die Griffelemente 16, 18 manuell von einem Bediener gegeneinander verschwenkt. In dem manuellen Modus wird das Seil 34 auf der Seilwinde 32 mittels der Rückstelleinheit 31 bzw. des Federelements 36 aufgewickelt. Da eine Kraft hierbei von einer Abtriebsseite auf die Kupplungseinheit 22 wirkt, befindet sich die Kupplungseinheit 22 in einem geöffneten Zustand. Die Seilwinde 32 kann daher ohne einen Widerstand der Getriebeeinheit 38 und der Antriebseinheit 20 verdreht werden. Das Seil 34 wird in diesem Zustand von dem Federelement 36 auf Spannung gehalten. Reduziert ein Bediener eine Kraft auf die Griffelemente 16, 18, weil beispielsweise ein Schneidevorgang beendet ist, werden die Griffelemente 16, 18 mittels der Öffnungsfeder 50 auseinander gedrückt und die Schneidvorrichtung 10 wird geöffnet. Das Seil 34 wird dabei entgegen der Federkraft des Federelements 36 von der Seilwinde 32 abgewickelt.

Ist eine Energiespeichereinheit 54 der Schneidvorrichtung 10 leer, kann die Schneidvorrichtung 10 in einem manuellen Modus verwendet werden, wobei die Antriebseinheit 20 auch bei einer Überschreitung einer von dem Kraftsensor 40 definierten Kraft deaktiviert bleibt. Es erfolgt keine Aktivierung der Antriebseinheit 20 wodurch auch die Kupplungseinheit 22 geöffnet bleibt.

Ist eine für den Schneidevorgang benötigte Kraft eines Bedieners Fᵤₛₑᵣ größer, als eine von dem Kraftsensor 40 definierte Kraft, welche zu einem Schließen des Schalters 72 benötigt wird, wird die Schneidvorrichtung 10 in einem unterstützen Modus verwendet. Ein Wechsel von einem manuellen Modus in einen unterstützten Modus erfolgt grundsätzlich während eines Schneidevorgangs. In dem manuellen Modus werden die Griffelemente 16, 18 manuell von einem Bediener gegeneinander verschwenkt. Wird ein hartes Schnittgut 11 geschnitten, müssen die Griffelemente 16, 18 mit hoher Kraft von einem Bediener gegeneinander gedrückt werden. Wird eine so hohe Kraft aufgebracht, dass der Schalter 72 bei Überwindung eine Federkraft F_{gs} schließt, wird dies von der Steuereinheit 52 sensiert. Die Steuereinheit 52 aktiviert daraufhin die Antriebseinheit 20. Wird in der Verzweigung 1220 festgestellt, dass der Schalter 72 geschlossen ist, wird die Antriebseinheit 20 über die Steuereinheit 52 in einem Schritt 1240 aktiviert. Die Antriebseinheit 20 wird demnach bei Überschreitung einer definierten Bedienerkraft einem Schließmechanismus der Schneidvorrichtung 10 zugeschalten. Die Antriebseinheit 20 treibt daraufhin über die Getriebeeinheit 38 das innere Drehelement 46 der Kupplungseinheit 22 an. Die Antriebseinheit 20 wird in Antriebsrichtung 41 angetrieben. Die Kupplungseinheit 22 wird geschlossen und treibt die Seilwinde 32 an. Das Seil 34 wird auf der Seilwinde 32 aufgewickelt. Die Griffelemente 16, 18 werden nun zusätzlich zu einer Bedienerkraft Fᵤₛₑᵣ durch eine Antriebskraft Fₐₛ zusammengedrückt bzw. zusammengezogen. Die Antriebseinheit 20 beaufschlagt in diesem Betriebszustand die Schneidelemente 12, 14, bei einer teilweise manuellen Bewegung, mit einer zusätzlichen Kraft. Die Antriebskraft Fₐₛ wirkt hierbei über die Seilwinde 32 an dem Seil 34.

Die Antriebskraft Fₐₛ wirkt hierbei über das Seil 34 an dem Hebel 80. Sofern die Bedienkraft Fᵤₛₑᵣ weiterhin größer ist, als eine von dem Kraftsensor 40 definierte Kraft, welche zu einem Schließen des Schalters 72 benötigt wird, ist die manuelle Bewegung durch die Antriebskraft Fₐₙ weiterhin unterstützt. Lässt hingegen die Bedienkraft Fᵤₛₑᵣ derart nach dass der Schalter 72 öffnet, so stoppt in einem Schritt 1260 die Antriebseinheit 20. Ein Stoppen der Antriebseinheit 20 im Schritt 1260 kann auch erzielt werden wenn die zwei Griffelemente 16, 18 geschlossen sind bzw. sich über das Beabstandungselement 630 berühren oder ein Objekt 17 zwischen den Griffelementen 16, 18 angeordnet wird, wodurch ebenfalls eine von dem Kraftsensor 40 definierte Kraft, welche zu einem Schließen des Schalters 72 benötigt wird unterschritten wird. Die Bedienkraft Fᵤₛₑᵣ kann in diesem Zustand nicht mehr weiter auf den Kraftsensor 40 wirken, da die Antriebskraft Fₐₛ über das Seil 34 an dem Hebel 80 wirkt und diesen in seine Ausgangsstellung bewegt in der der Schalter 72 geöffnet ist. Die Antriebseinheit 20 wird dann in einem Schritt 1280 kurzzeitig in Gegenantriebsrichtung 410 angetrieben um die Kupplungseinheit 22 zu öffnen. Das Bremselement 28 bremst den Käfig 26, die Klemmkörper 24 klemmen nicht mehr das äußere mit dem inneren Drehelement 46, 48. Dieser Richtungsumkehr der Antriebseinheit 20 bzw. des Antriebs der Antriebseinheit 20 in Gegenantriebsrichtung 410, kann dazu kurzzeitig ausfallen, beispielsweise weniger als 100 Millisekunden betragen, insbesondere 40 Millisekunden. Dann wird die Antriebseinheit 20 in einem Schritte 1300 deaktiviert. Nach einer Deaktivierung der Antriebseinheit 20, kann das Verfahren von vorne begonnen werden.

Grundsätzlich kann die Kupplungseinheit 22 bei Ausbleiben einer Drehbewegung die Antriebseinheit 20 auch selbsttätig entkoppeln. Dabei kann die Schneidvorrichtung 10, wenn eine Drehbewegung der Antriebseinheit 20 stoppt, prinzipiell auch durch die Öffnungsfeder 50 zumindest teilweise geöffnet und dabei die Seilwinde 32 über das Seil 34 teilweise entgegen einer Antriebsrichtung 41 der Antriebseinheit 20 verdreht werden. Dabei kann ebenfalls eine Verdrehung des inneren Drehelements 46 zu dem äußeren Drehelement 48 der Kupplungseinheit 22 stattfinden und die Kupplungseinheit 22 so geöffnet werden. Grundsätzlich wäre jedoch auch eine andere Methode zur Öffnung der Kupplungseinheit 22 denkbar.

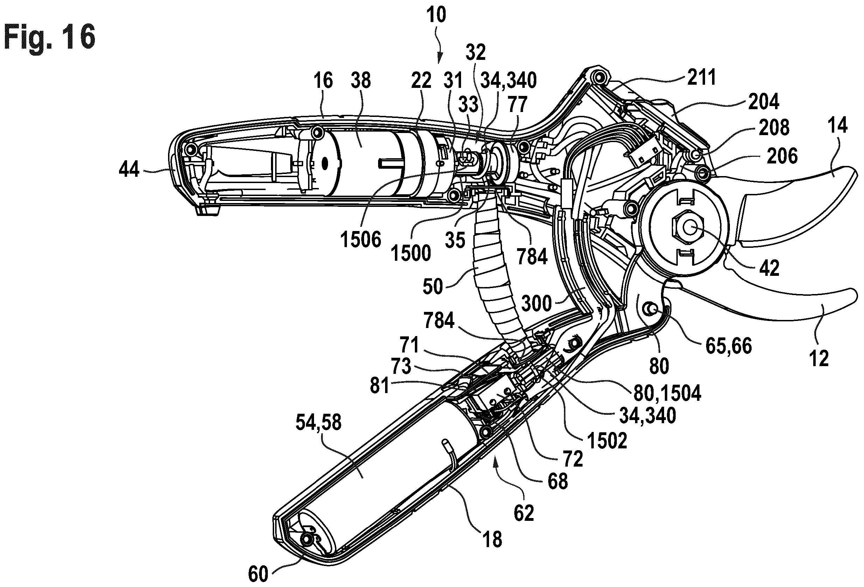

Figur 16 entspricht im Wesentlichen der Figur 3 aus einer anderen Perspektive und zeigt darüber hinaus einige weitergehende Details auf die hier eingegangen werden soll. Das Antriebskraftübertragungselement 340 ist in Form eines Seils 34 dargestellt. Es ist mittels eines Knotens 1500 an der Seilwinde 32 fixiert. Zur Anbringung des Antriebskraftübertragungselements 340, bzw. dessen Montage wird das Seil 34 mit seiner Schlaufe 1502 durch die Aufnahme 33 gesteckt, ggf. durch die Führungshülse 784, die Öffnungsfeder 50 und die weitere Führungshülse 784 gesteckt, und schließlich über das Ende des Hebels 80 geschoben. Zur sicheren Aufnahme der Schlaufe 1502 weist der Hebel 80 eine Verjüngung 1504 auf. Der Konten 1500 am anderen Ende des Seils 34 ist zu Dick um durch die Aufnahme 33 rutschen zu können. Ferne wird er durch die Abrundungen 1506 an der Aufnahme sofern er zugbelastet ist nebst dem Formschluss auch kraftschlüssig beaufschlagt. Die Abrundungen wirken quasi trichterförmig bzw. keilförmig und klemmen den Knoten regelrecht, so dass sich dieser an die Aufnahme anschmiegt und verfestigt.

Bei einem Seilriss oder zu Wartungszwecken kann das Seil in umgekehrter Reihenfolge zur vorher beschriebenen Montage auch auf einfache Weise demontiert werden. Montage und Demontage können werkzeuglos erfolgen.

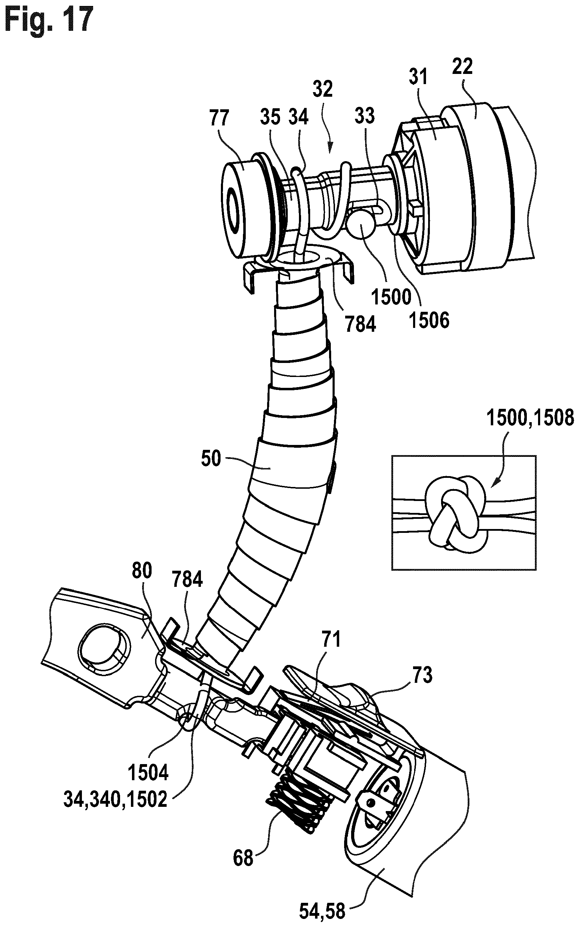

Fig. 17 zeigt einen Ausschnitt aus Fig. 16 von einer Gegenseite. Der Knoten 1500 des Seils 34 ist im Bereich der Ausnehmung 33 symbolisch als Rundkugel gezeigt. In der vergrößerten Darstellung rechts ist der Knoten 1500 als Diamantknoten 1508 dargestellt.

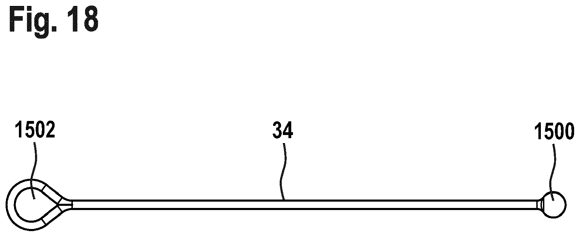

Fig. 18 zeigt das Antriebskraftübertragungselement 340 bzw. Seil 34 in einer Einzeldarstellung. Es weist links die Schlaufe 1502 auf und rechts den Knoten 1500, der abermals symbolisch als Rundkugel dargestellt ist. Das eine Ende (nicht dargestellt) des initialen Seils (also bevor es zur Schlaufe mit Knoten geformt wurde) wird etwa auf halber Länge des abgebildeten Seils 34 zurück in das Seil geführt, so dass eine Schlaufe bzw. Öse bzw. Auge entsteht. Somit fungiert eine Hälfte des Seils 34 als Mantel für die andere Hälfte und übrig bleibt auf der einen Seite die Schlaufe 1502 und auf der anderen Seite zwei Enden des initialen Seils. Diese zwei Enden werden nun verknotet - vorteilhaft mit einem Diamantknoten. Der Diamantknoten sorgt für eine feste Verbindung der zwei Seilenden. Dadurch wird eine Relativbewegung der zwei Enden zueinander zumindest weitestgehend unterbrochen. Zudem bewirkt der Diamantknoten 1508 eine ausreichende Verdickung des Seils 34 um ein Durchrutschen durch die Aufnahme 33 zu verhindern. Er vergrößert den Durchmesser gegenüber dem Seil 34 um ein Vielfaches. Das Seil 34, welches abgesehen von der Schlaufe 1502 ein Kernseil und ein ummantelndes Seil darstellt kann nun die doppelte Tragfähigkeit des initialen Seils aufnehmen. Durch die feste Verknotung der Enden tragen unter Belastung der Schlaufe 1502, bzw. unter Lastaufbringung zwischen Schlaufe 1502 und Knoten 1500 beide Seilhälften gleichermaßen. Zudem kommt es unter Belastung zu keiner schädigenden Relativbewegung der Seilhälften zueinander. Je fester das Seil 34 belastet wird, desto stärker wird der Knoten 1500 durch die Aufnahme 33 bzw. deren Geometrie komprimiert. Der Kraftschluss wird stärker, der Knoten gequetscht und dadurch fester.
Durch die vorgenannte Rückführung des einen Endes zum anderen kann das Seil unter großer Kompaktheit eine maximale Kraft übertragen. Das Material wird wenig verschleißtechnisch beaufschlagt und kann trotz wiederholter Aufwicklung auf der Seilwinde 32, Überlagerung zueinander und tausendfacher Kraftbeaufschlagung reißfest bleiben. Somit werden für die Anwendung in Werkzeugmaschinen ideale Eigenschaften erzielt. Prinzipiell möglich wäre auch eine einseitige Schlaufenbildung und Verspleißung des freien Endes und Verknotung des anderen Endes, dann wäre jedoch ein Durchfädeln (aufgrund des Verspleißens aufwendiger (oder die Aufnahmeöffnung 33 müsste größer gestaltet werden) und der Knoten umso häufiger verknotet werden um mit weniger Material (nur ein Ende des Seils) einen noch dickeren Knoten zu knoten.

Die Öse bzw. Schlinge ist über ein Ende des Hebels 80 gestülpt. Die Schlinge kommt an einem Seilaufnahmebereich des Hebels 80 zum Liegen. Dieser Seilaufnahmebereich ist vorteilhaft zumindest gegenüber umliegenden Bereichen des Hebels 80 verjüngt, insbesondere um ein Abrutschen zu vermeiden, bzw. eine sichere Lokalisierung der Schlinge zu ermöglichen. Die Aufnahme 33 bildet durch die abgerundeten Übergänge einen keilartigen Übergang zur Oberfläche der Seilwinde 32. Dadurch wird eine Quetschung des Knotens erreicht. Diese Quetschung verhindert zumindest zusätzlich eine selbstständige Öffnung des Knotens.

## Patentansprüche

1. Schneidvorrichtung (10), insbesondere Gartenschneidvorrichtung, mit einem ersten und einem zweiten relativ zueinander bewegbaren Schneidelement (12,14), mit einem ersten und einem zweiten relativ zueinander bewegbaren Griffelement (16, 18), mit zumindest einer Antriebseinheit (20), die in zumindest einem Betriebszustand dazu vorgesehen ist, eine Bewegung des zweiten Schneidelements (14) relativ zu dem ersten Schneidelement (12) zumindest zu unterstützen und mit zumindest einem Antriebskraftübertragungselement (340), das zumindest in dem einen Betriebszustand mit der Antriebseinheit (20) in Wirkverbindung steht, **dadurch gekennzeichnet, dass** das Antriebskraftübertragungselement (340) ein Seil (34) ist, das eine Schlinge (1502) und einen Knoten (1500) aufweist, wobei der Knoten (1500) an, insbesondere zumindest teilweise in einer Aufnahme (33) einer Seilwinde (32) und die Schlinge (1502) an einem Hebel (80) angeordnet sind.

2. Schneidvorrichtung (10) nach Anspruch 1, **dadurch gekennzeichnet, dass** das Antriebskraftübertragungselement (340) aus Polyethylen ist, insbesondere aus Polyethylen mit ultrahoher molarer Masse.

3. Schneidvorrichtung (10) nach einem der vorhergehenden Ansprüche, **dadurch gekennzeichnet, dass** der Knoten (1500) ein Diamantknoten (1510) ist.

4. Schneidvorrichtung (10) nach einem der vorhergehenden Ansprüche, **dadurch gekennzeichnet, dass** zur Bildung der Schlinge (1502) ein Teil des Antriebskraftübertragungselements (340), insbesondere nahezu eine Hälfte des Antriebskraftübertragungselements (340), in den anderen Teil des Antriebskraftübertragungselements (340) zurückgeführt ist.

5. Schneidvorrichtung (10) nach einem der vorhergehenden Ansprüche, **dadurch gekennzeichnet, dass** zwischen Konten (1500) und Schlaufe (1502) eine Öffnungsfeder, insbesondere eine Doppelevolutfeder und/oder zumindest ein Führungselement (780), insbesondere eine Führungshülse (78), insbesondere aus Polyoxymethylen oder UHMWPE, angeordnet ist. Reinform

6. Schneidvorrichtung (10), insbesondere Gartenschere, besonders bevorzugt batteriebetriebene Gartenschere, nach einem der vorhergehenden Ansprüche, **dadurch gekennzeichnet, dass** die Schneidvorrichtung (10) einen manuellen sowie einen manuell-maschinengestützten Betrieb ermöglicht.

## Claims

1. Cutting device (10), in particular a garden cutting device, having a first and a second cutting element (12, 14) that are movable relative to one another, having a first and a second gripping element (16, 18) that are movable relative to one another, having at least one drive unit (20), which is provided, in at least one operating state, at least to support a movement of the second cutting element (14) relative to the first cutting element, and having at least one driving force transmission element (340), which, at least in the one operating state, is operatively connected to the drive unit (20), **characterized in that** the driving force transmission element (340) has a cable (34) that has a loop (1502) and a knot (1500), wherein the knot (1500) is arranged on, in particular at least partially in, a receptacle (33) of a winch (32), and the loop (1502) is arranged on a lever (80).

2. Cutting device (10) according to Claim 1, **characterized in that** the driving force transmission element (340) is made of polyethylene, in particular of ultrahigh molecular weight polyethylene.

3. Cutting device (10) according to either of the preceding claims, **characterized in that** the knot (1500) is a diamond knot (1510).

4. Cutting device (10) according to one of the preceding claims, **characterized in that**, in order to form the loop (1502), a part of the driving force transmission element (340), in particular almost half of the driving force transmission element (340), is guided back into the other part of the driving force transmission element (340).

5. Cutting device (10) according to one of the preceding claims, **characterized in that**, between the knot (1500) and the loop (1502), an opening spring, in particular a double volute spring, and/or at least one guide element (780), in particular a guide sleeve (78), in particular made of polyoxymethylene or UHMWPE, is arranged.

6. Cutting device (10), in particular garden shears, particularly preferably battery-operated garden shears, according to one of the preceding claims, **characterized in that** the cutting device (10) allows manual and manual/machine-assisted operation.

## Revendications

1. Dispositif de coupe (10), notamment dispositif de coupe pour le jardin, comprenant un premier et un deuxième élément de coupe mobiles l'un par rapport à l'autre (12, 14), comprenant un premier et un deuxième élément de poignée mobiles l'un par rapport à l'autre (16, 18), comprenant au moins une unité d'entraînement (20), qui est prévue dans au moins un état de fonctionnement pour au moins assister un mouvement du deuxième élément de coupe (14) par rapport au premier élément de coupe (12), et comprenant au moins un élément de transfert de force d'entraînement (340), qui est en liaison active avec l'unité d'entraînement (20) au moins dans l'état de fonctionnement, **caractérisé en ce que** l'élément de transfert de force d'entraînement (340) est un câble (34), qui comprend un collet (1502) et un nœud (1500), le nœud (1500) étant agencé sur, notamment au moins partiellement dans, un logement (33) d'un treuil (32) et le collet (1502) étant agencé sur un levier (80).

2. Dispositif de coupe (10) selon la revendication 1, **caractérisé en ce que** l'élément de transfert de force d'entraînement (340) est en polyéthylène, notamment en polyéthylène de masse molaire ultra-élevée.

3. Dispositif de coupe (10) selon l'une quelconque des revendications précédentes, **caractérisé en ce que** le nœud (1500) est un nœud de diamant (1510).

4. Dispositif de coupe (10) selon l'une quelconque des revendications précédentes, **caractérisé en ce que,** pour la formation du collet (1502), une partie de l'élément de transfert de force d'entraînement (340), notamment presque une moitié de l'élément de transfert de force d'entraînement (340), est ramenée dans l'autre partie de l'élément de transfert de force d'entraînement (340).

5. Dispositif de coupe (10) selon l'une quelconque des revendications précédentes, **caractérisé en ce qu'**un ressort d'ouverture, notamment un ressort à double volute, et/ou au moins un élément de conduction (780), notamment une gaine de conduction (78), notamment en polyoxyméthylène ou UHMWPE, est agencé entre le nœud (1500) et la boucle (1502).

6. Dispositif de coupe (10), notamment cisailles pour le jardin, de manière particulièrement préférée cisailles pour le jardin fonctionnant avec des piles, selon l'une quelconque des revendications précédentes, **caractérisé en ce que** le dispositif de coupe (10) permet un fonctionnement manuel, ainsi qu'un fonctionnement manuel assisté par moteur.
